# EUROPÄISCHE PATENTSCHRIFT

(11) **EP 0 753 543 B1**
(45) Veröffentlichungstag und Bekanntmachung des Hinweises auf die Patenterteilung: **27.10.1999**
(21) Anmeldenummer: 96110597.0
(22) Anmeldetag: 01.07.1996
(51) Int. Cl.: C09B 43/136, C09D 11/00

(54) **Substantive Disazofarbstoffe**
Substantive disazo dyestuffs
Colorants disazoiques substantifs

(30) Priorität: 14.07.1995 DE 19525608
(43) Veröffentlichungstag der Anmeldung: 15.01.1997
(73) Patentinhaber: BAYER AG, 51368 Leverkusen (DE)
(72) Erfinder: Wild, Peter, Dr., 51519 Odenthal (DE); Hassenrück, Karin, Dr., Mt. Pleasant, SC 29464 (US); Stöhr, Frank-Michael, Dr., 51519 Odenthal (DE)

(56) Entgegenhaltungen:
- EP-A- 0 584 045
- EP-A- 0 591 103
- EP-A- 0 657 509
- DE-A- 2 232 541
- PATENT ABSTRACTS OF JAPAN vol. 011, no. 085 (C-410), 14.März 1987 & JP-A-61 238856 (MITSUBISHI CHEMICAL INDUSTRIES, LTD.), 24.Oktober 1986,

## Beschreibung

Die Erfindung betrifft substantive Disazofarbstoffe, ein Verfahren zu ihrer Herstellung sowie ihre Verwendung zum Färben und Bedrucken hydroxyl- und/oder amidgruppenhaltiger Substrate.

Disazofarbstoffe, die aus zwei über einen bivalenten reaktiven Triazinyl-Rest verbrückten Azofarbstoffen bestehen, sind beispielsweise auch aus JP-A-61238856 bekannt. Auch in EP-A 584 045 sind bereits ähnliche Farbstoffe beschrieben, die ein reaktives triazinylhaltiges Brückenglied enthalten.

Gemäß EP-A-657 509 werden polymere Farbstoffe aus Polyamidaminen und Reaktivfarbstoffen offenbart, wobei als Reaktivfarbstoffe über Triazinylgruppen verdoppelte Monoazofarbstoffe beschrieben werden.

In EP-A-591 103 werden über Brückenglieder verdoppelte Monoazofarbstoffe offenbart, wobei das Brückenglied jeweils an einem Phenylring des Monoazofarbstoffs gebunden ist.

Es wurden nun Verbindungen der Formel (I) gefunden, 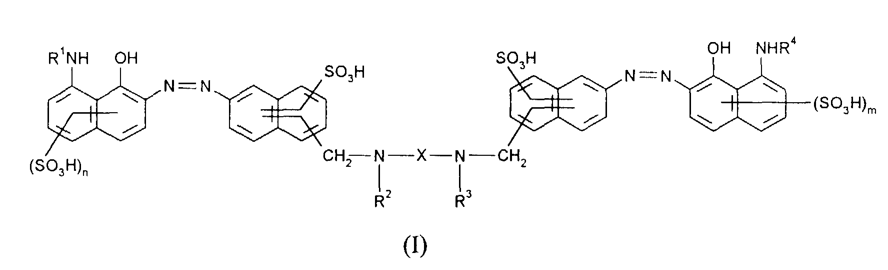 worin
- X: ein nicht faserreaktives Brückenglied ist und für CO, einen Rest einer aliphatischen-, aromatisch-carbocyclischen-, heterocyclischen- oder aromatisch-heterocyclischen Dicarbonylverbindung oder für einen Rest der Formel 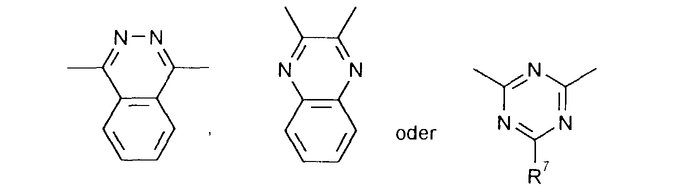 steht, worin
- R⁷: für OH, C₁-C₄-Alkoxy, C₆-C₁₀-Aryloxy, C₆-C₁₀-Aryl, C₁-C₄-Alkyl, C₁-C₄-Alkylmercapto oder Phenylmercapto, NH₂ oder
für einen Rest der Formel NR¹¹R¹² steht, worin
- R¹¹: Wasserstoff, C₁-C₄-Alkyl oder C₂-C₄-Hydroxyalkyl und
- R¹²: C₂-C₄-Hydroxyalkyl oder C₂-C₄-Hydroxyalkoxy-C₂-C₄-alkyl bedeuten oder -NR¹¹R¹² einen 5- oder 6-gliedrigen Ring bildet, der 1 bis 3 Heteroatome einschließt und der unsubstituiert oder substituiert ist durch 1 bis 3 Substituenten aus der Reihe C₁-C₄-Alkyl und durch Hydroxy oder Amino monosubstituiertes C₂-C₄-Alkyl, und deren Salze,
- R¹ und R⁴: unabhängig voneinander für einen Acylrest stehen,
- R² und R³: unabhängig voneinander für Wasserstoff oder unsubstituiertes oder substituiertes C₁-C₄-Alkyl stehen und
- n und m: unabhängig voneinander für 1 oder 2 stehen.

Unter einem nicht faserreaktiven Brückenglied wird ein bivalenter Rest verstanden, der keine faserreaktiven Reste trägt, die mit den OH- oder NH-Gruppen der Faser unter Färbebedingungen unter Ausbildung kovalenter Bindungen zu reagieren vermögen.

Unter einem Acylrest in der Bedeutung von R¹ und R⁴ wird im allgemeinen ein organischer Säurerest, insbesondere der einer Carbonsäure oder einer Sulfonsäure verstanden. Als bevorzugte Acylreste in der Bedeutung von R¹ und R⁴ kommen unabhängig voneinander Alkenylcarbonyl, Alkylcarbonyl, Alkylsulfonyl, Arylcarbonyl oder Arylsulfonyl in Frage. Bevorzugte Alkylreste sind dabei solche mit C₁-C₄-Alkyl, insbesondere Methyl, Ethyl, n-Propyl, iso-Propyl, n-Butyl, sec.-Butyl oder tert.-Butyl. Bevorzugte Arylgruppen sind dabei unsubstituiertes oder durch Substituenten wie vorzugsweise Cl, COOH, NO₂, C₁-C₄-Alkyl, C₁-C₄-Alkoxy substituiertes Phenyl oder Naphthyl. Bevorzugte Alkenylreste sind gegebenenfalls durch COOH oder C₁-C₄-Alkyl substituiertes C₂-C₄-Alkenyl, insbesondere C₂-Alkenyl.

Als mögliche COOH-gruppenhaltige Acylreste können dabei beispielsweise solche genannt werden, die sich von Maleinsäureanhydrid, Bernsteinsäureanhydrid, Glutarsäureanhydrid, Essigsäureanhydrid, Phthalsäureanhydrid, Citraconsäureanhydrid oder Methylbernsteinsäureanhydrid ableiten.

Unter einem Acylrest wird aber auch ein Rest der Formel 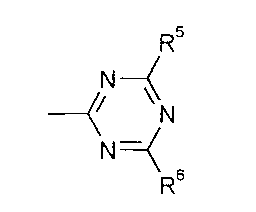 verstanden, worin
- R⁵ und R⁶: unabhängig voneinander für OH, C₁-C₄-Alkoxy, C₆-C₁₀-Aryloxy, C₆-C₁₀-Aryl, C₁-C₄-Alkyl, C₁-C₄-Alkylmercapto oder Phenylmercapto, NH₂ oder mono- oder disubstituiertes Amin, wie mono- oder di-C₁-C₄-Alkylamino, 5- oder 6-gliedrige cyclische Amine oder mono- oder di-C₆-C₁₀-Arylamino stehen.
Jeder für R¹¹ oder R¹² definierte Alkyl- oder substituierte Alkylrest kann geradlinig oder verzweigt sein.

In einer hydroxy- oder hydroxyalkoxy-substituierten Alkylgruppe, die an ein N-Atom gebunden ist, befindet sich die Hydroxy- oder Hydroxyalkoxygruppe bevorzugt nicht an einem dem N-Atom benachbarten C-Atom. Ebenso befindet sich die Hydroxygruppe in einer Hydroxyalkoxygruppe bevorzugt nicht an einem dem O-Atom benachbarten C-Atom.

Bedeutet -NR¹¹R¹² einen heterocyclischen Ring, so kann dieser zusätzlich zum Stickstoffatom 1 oder 2 weitere Heteroatome aus der Reihe N, O und S enthalten. Bevorzugt stehen R¹¹ für Wasserstoff, C₁-C₂-Alkyl oder C₂-C₃-Hydroxyalkyl und R¹² für C₂-C₃-Hydroxyalkyl oder C₂-C₃-Hydroxyalkoxy-C₂-C₃-alkyl, oder -NR¹¹R¹² für einen Pyrrolidin-, Piperidin-, Morpholin- oder Piperazin-Ring, der durch eine bis drei Gruppen aus der Reihe Methyl und/oder durch Hydroxy oder Amino monosubstituiertes C₂-C₃-Alkyl substituiert sein kann.

Besonders bevorzugt stehen R¹¹ für Wasserstoff, Methyl oder C₂-C₃-Hydroxyalkyl, und R¹² für C₂-C₃-Hydroxyalkyl, oder -NR¹¹R¹² für einen Piperidin-, Morpholin-, Piperazin- oder 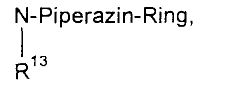 worin
- R¹³: Methyl, Ethyl, 2-Hydroxyethyl oder 2-Aminoethyl bedeutet.

Insbesondere bevorzugt stehen R¹¹ für Wasserstoff oder 2-Hydroxyethyl und R¹² für 2-Hydroxyethyl.
- X: steht bevorzugt für 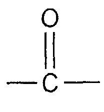 oder einen Rest einer Dicarbonylverbindung der Formel 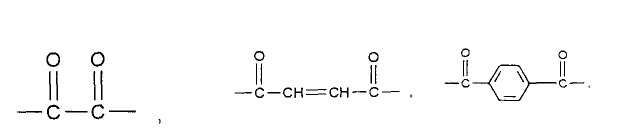 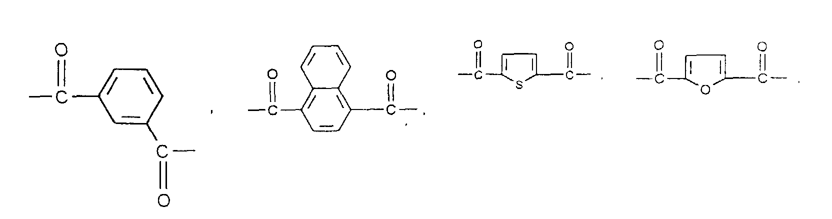 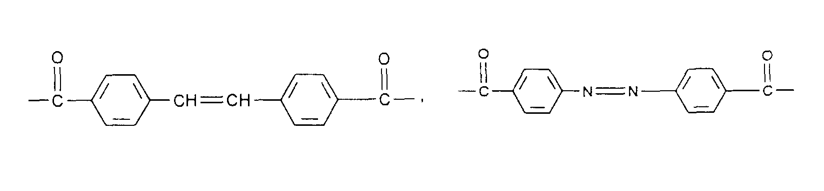 oder 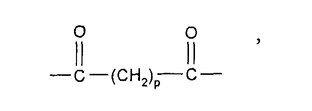 worin
- o und p: unabhängig voneinander für eine Zahl von 1 bis 6 stehen
oder für einen bivalenten Rest der Formel 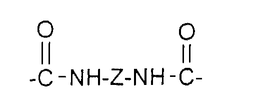 worin Z

-(CH₂)₆,

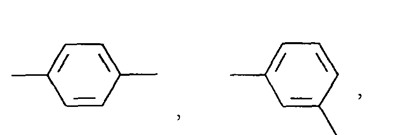

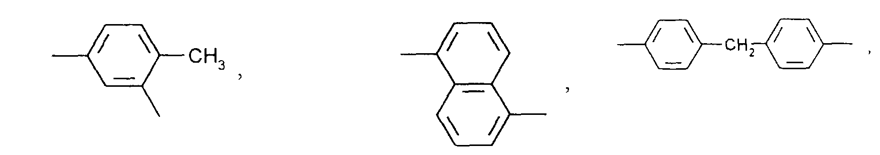

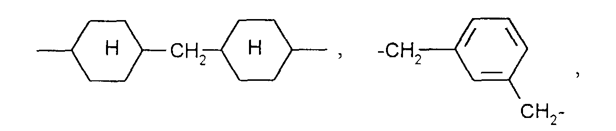

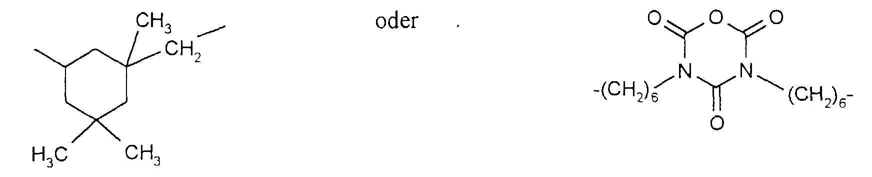

bedeutet.
Ganz besonders bevorzugt stehen
- R¹ und R⁴: unabhängig voneinander für C₁-C₄-Alkylcarbonyl, wie Methylcarbonyl, Ethylcarbonyl, Propyl- oder Butylcarbonyl, unsubstituiertes oder durch C₁-C₄-Alkyl, C₁-C₄-Alkoxy und/oder NO₂ substituiertes Benzoyl, Maleinyl oder für einen Rest der Formel 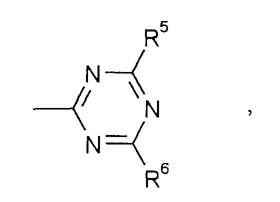
worin
- R⁵ und R⁶: unabhängig voneinander OH, C₁-C₄-Alkoxy, C₁C₄-Alkylthio, Phenylthio, Phenoxy, NH₂ oder NR⁸R⁹ bedeutet,
wobei
- R⁸: Wasserstoff, C₁-C₄-Alkyl oder C₁-C₄-Hydroxyalkyl und
- R⁹: C₁-C₄-Alkyl, C₂-C₄-Hydroxyalkyl oder C₂-C₄-Hydroxyalkoxy-C₂-C₄-alkyl bedeuten oder -NR⁸R⁹ einen 5- oder 6-gliedrigen Ring bildet, der 1 bis 3 Heteroatome einschließt und der unsubstituiert oder substituiert ist durch 1 bis 3 Substituenten aus der Reihe C₁-C₄-Alkyl und durch Hydroxy oder Amino monosubstituiertes C₁-C₄-Alkyl.

Jeder für R⁸ oder R⁹ definierte Alkyl- oder substituierte Alkylrest kann geradlinig oder verzweigt sein.

In einer hydroxy- oder hydroxyalkoxy-substituierten Alkylgruppe, die an ein N-Atom gebunden ist, befindet sich die Hydroxy- oder Hydroxyalkoxygruppe bevorzugt nicht an einem dem N-Atom benachbarten C-Atom. Ebenso befindet sich die Hydroxygruppe in einer Hydroxyalkoxygruppe bevorzugt nicht an einem dem O-Atom benachbarten C-Atom.

Bedeutet -NR⁸R⁹ einen heterocyclischen Ring, so kann dieser zusätzlich zum Stickstoffatom 1 oder 2 weitere Heteroatome aus der Reihe N, O und S enthalten. Bevorzugt stehen R⁸ für Wasserstoff, C₁-C₂-Alkyl oder C₂-C₃-Hydroxyalkyl und R⁹ für C₂-C₃-Hydroxyalkyl oder C₂-C₃-Hydroxyalkoxy-C₂-C₃-alkyl, oder -NR⁸R⁹ für einen Pyrrolidin-, Piperidin-, Morpholin- oder Piperazin-Ring, der durch eine bis drei Gruppen aus der Reihe Methyl und/oder durch Hydroxy oder Amino monosubstituiertes C₂-C₃-Alkyl substituiert sein kann.

Besonders bevorzugt stehen R⁸ für Wasserstoff, Methyl oder C₂-C₃-Hydroxyalkyl, und R⁹ für C₂-C₃-Hydroxyalkyl, oder -NR⁸R⁹ für einen Piperidin-, Morpholin-, Piperazin- oder 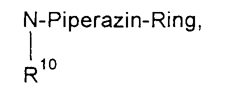 worin
- R¹⁰: Methyl, Ethyl, 2-Hydroxyethyl oder 2-Aminoethyl bedeutet.

Insbesondere bevorzugt stehen R⁸ für Wasserstoff oder 2-Hydroxyethyl und R⁹ für 2-Hydroxyethyl.

Als Substituenten der Alkylgruppen in der Bedeutung von R² und R³ sind OH, OCH₃ oder OC₂H₅ bevorzugt.

Bevorzugte Verbindungen der Formel (I) entsprechen der Formel (II) 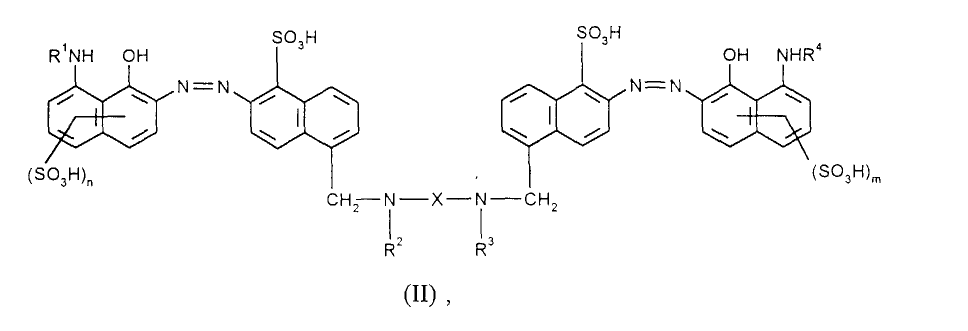 worin
- R¹ bis R⁴,: X und n und m die oben angegebene Bedeutung besitzen.

Weitere bevorzugte Verbindungen der Formel (I) entsprechen der Formel (III) 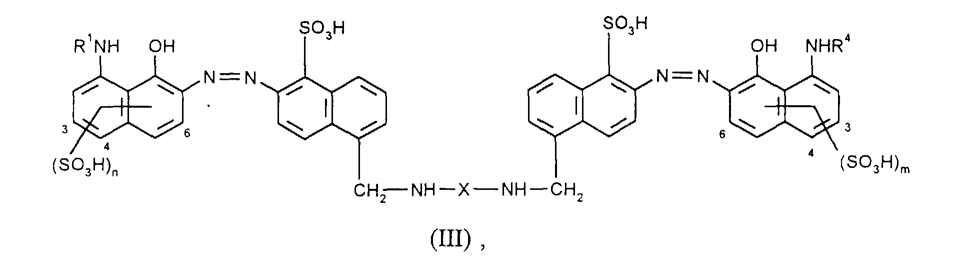 worin die SO₃H-Gruppen in den terminalen Naphthalinringen jeweils unabhängig voneinander in den Positionen 3, 4 und/oder 6 stehen,
- R¹ und R⁴: unabhängig voneinander für C₁-C₄-Alkylcarbonyl, Benzoyl oder durch C₁-C₄-Alkyl, C₁-C₄-Alkoxy und/oder NO₂ substituiertes Benzoyl stehen und
- X, m und n: die oben genannte Bedeutung haben.

Ganz besonders bevorzugte Verbindungen der Formel (I) entsprechen der Formel (IV) 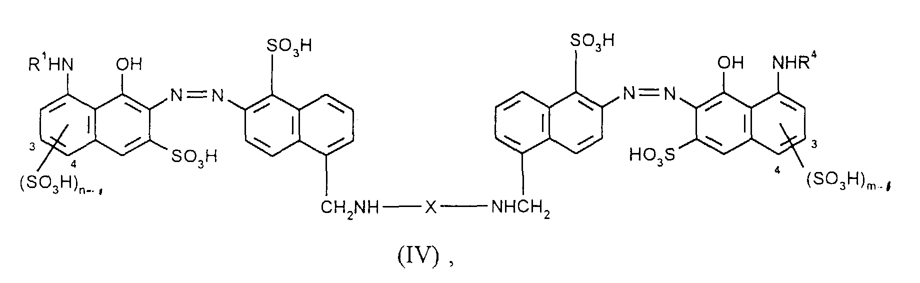 worin die SO₃H-Gruppe in den jeweiligen terminalen Naphthalinringen jeweils unabhängig voneinander in der Position 3 oder 4 steht und
- X, R¹ und R⁴: die oben genannte Bedeutung haben.

Die Verbindungen der Formel (I) können symmetrisch oder unsymmetrisch sein.

Bevorzugt sind symmetrische Verbindungen der Formel (I), worin
R¹ = R⁴,
R² = R³,
n = m und die Stellungen der SO₃H-Gruppen auf der rechten Molekülhälfte identisch zu denen auf der linken Molekülhälfte sind und X die oben genannte Bedeutung besitzt.

Bevorzugte unsymmetrische Verbindungen der Formel (I) sind solche, worin
- X: für einen Rest der Formel 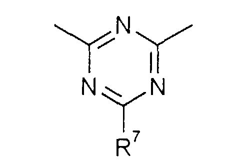 steht, in der R⁷ die obige Bedeutung besitzt und R¹ ≠ R⁴ und/oder R² ≠ R³ und/oder n ≠ m und/oder die Stellungen der SO₃H-Gruppen auf der rechten Molekülhälfte sich von denen auf der linken Molekülhälfte unterscheiden.

Die Verbindungen der Formel (I) können als freie Säure, als Salz von Alkalimetallen wie Lithium, Natrium oder Kalium, oder als unsubstituiertes oder substituiertes Ammoniumsalz vorliegen, wobei insbesondere auch gemischte Salze möglich sind. In Salzen enthaltend als Kation substituiertes Ammonium, kann sich dieses von einem primären, sekundären oder tertiären Amin ableiten, beispielsweise sind die folgenden Amine geeignet: Mono-, Di- oder Trimethyl-, -ethyl-, -propyl- oder -butyl-amin; Mono-, Di- oder Tri-ethanol-, -propanol oder Isopropanol-amin; N-Methyl-N-hydroxyethylamin, N-Methyl-N,N-di(hydroxyethyl)amin, N-Ethyl-N-hydroxyethylpiperazin; Ethylendiamin, Hexamethylendiamin; Dimethylaminopropylamin, Diethylaminopropylamin, Diethylenglykol amin, Diglykolamin und 3-Methoxypropylamin.

Als Amine sind auch Polyglykolamine geeignet, die beispielsweise durch Umsetzung von Ammoniak, Alkyl oder Hydroxyalkylamin mit Alkylenoxiden erhalten werden können.

Als substituiertes Ammoniumion kann auch ein quaternäres Ammoniumion vorliegen, das sich von Ammoniumverbindungen ableitet, die bevorzugt ein oder zwei quaternäre Ammoniumionen enthalten, beispielsweise sind zu nennen: Tetramethyl-, Tetraethyl-, Trimethylethyl-, Dimethyl-di-(2-hydroxypropyl)-, Trimethylhydroxyethyl-, Tetrahydroxyethyl- und Trimethylbenzyl-ammoniumhydroxid.

Die Erfindung betrifft weiterhin ein Verfahren zur Herstellung von Verbindungen der Formel (I), das dadurch gekennzeichnet ist, daß man einen Monoazofarbstoff der Formel (V) in Form der Verbindung (Va) und/oder (Vb) 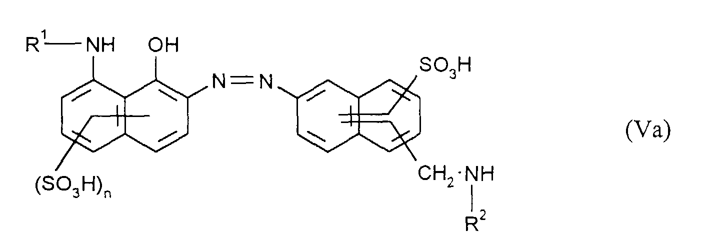 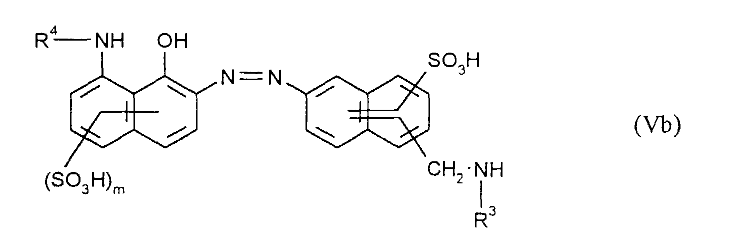 worin R¹ bis R⁴, n und m die oben angegebenen Bedeutungen haben,
mit reaktiven Verbindungen umsetzt, die mindestens zwei gegenüber primären oder sekundären Aminen reaktive Gruppen enthalten, wobei das molare Verhältnis des Monoazofarbstoffes der Formel (V) zur reaktiven Verbindung ≥ 2:1 beträgt. Natürlich sind auch kleinere Verhältnisse möglich, jedoch führen sie zu keinem stöchiometrischen Umsatz. Ein Verhältnis von (V) zur reaktiven Verbindung, was größer als 3:1 ist, führt zwar ebenfalls zum gewünschten Zielprodukt, jedoch ist diese Verfahrensvariante als unökonomisch zu bezeichnen.

Für den Fall, daß die reaktive Verbindung mehr als zwei gegenüber primären oder sekundären Aminen reaktive Gruppen enthält, die auch als faserreaktive Reste wirken können, können diese in einer Anschlußreaktion beispielsweise durch Hydrolyse, Alkoholyse oder Aminolyse in nicht faserreaktive Gruppen überführt werden.

In einer bevorzugten Ausführungsform des erfindungsgemäßen Verfahrens wird als reaktive Verbindung Phosgen, aliphatische-, aromatische-, carbocyclische-, heterocyclische- oder aromatisch-heterocyclische Dicarbonsäuren oder deren Derivate, wie Ester, Halogenide, insbesondere Chloride oder Isocyanate, oder Dihalogenheterocyclen der Formel 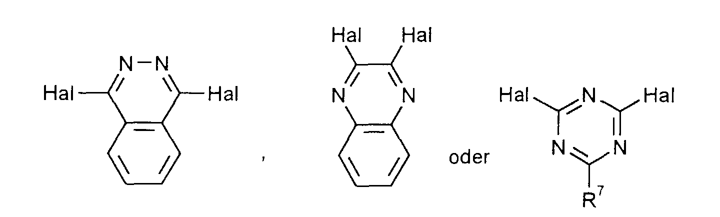 worin
- R⁷: die oben genannte Bedeutung hat oder für Hal steht, sofern Hal in einer Nachfolgereaktion mit H-R⁷ bei Temperaturen von 50 bis 100°C in einen Rest R⁷ überführt wird (vgl. DE-A 4 005 551), und
- Hal: unabhängig voneinander für Halogen, insbesondere für Cl, Br oder F steht.

Die Reaktionsbedingung zur Herstellung der Verbindungen der Formel (I) lassen sich im wesentlichen aus EP-A 361 186 übertragen.

Die Verbindungen der Formel (I) werden vorzugsweise als Farbstoffe zum Färben und Bedrucken von hydroxyl- und/oder amidgruppenhaltigen Substraten eingesetzt und färben cellulosehaltige Materialien in brillanten roten Tönen, insbesondere Papier, Baumwolle und Viskose sowie Leder mit guten Naß- und Lichtechtheiten.

Die Farbstoffe können nach allen in der Papier- und Textilindustrie für substantive Farbstoffe gebräuchlichen Verfahren verwendet werden, insbesondere in der Massen- wie in der Oberflächenfärbung von Papier für geleimte oder ungeleimte Sorten, ausgehend von gebleichten oder ungebleichten Zellstoff verschiedener Provenienz wie Nadel- oder Laubholz-sulfit- und/oder -sulfat-Zellstoff. Sie können auch in Garn- und Stückfärberei von Baumwolle, Viskose und Leinen nach dem Ausziehverfahren aus langer Flotte oder in Kontinueverfahren angewandt werden.

Weiterer Gegenstand der Erfindung ist ein Verfahren zum Färben von cellulosehaltigen Materialien mit den Farbstoffen der Formel (I).

Die erfindungsgemäßen Verbindungen der Formel (I) können als feste oder flüssige Farbstoffpräparationen eingesetzt werden. Sie werden vorzugsweise in Form von wäßrigen Präparationen, insbesondere von Lösungen eingesetzt. Diese wäßrigen Farbstoffpräparationen enthalten im allgemeinen einen oder mehrere Farbstoffe der Formel (I), gegebenenfalls geeignete organische Lösungsmittel, worunter auch hydrotrope Verbindungen zählen können sowie weitere Hilfsmittel und/oder Stabilisatoren.

Die wäßrigen Farbstoffpräparationen können durch Auflösen der Farbstoffsalze in Wasser oder aus den Kondensationslösungen, die gegebenenfalls einer Entsalzung z.B. durch Druckpermeation unterworfen werden und/oder durch Zusatz eines oder mehrerer der obengenannten organischen Lösungsmitteln gegebenenfalls bei erhöhten Temperaturen (30 bis 100°C, insbesondere 30 bis 50°C) und unter Zusatz von anorganischen und organischen Basen hergestellt werden; gegebenenfalls können zusätzlich noch übliche ionische oder nichtionische Zusatzstoffe verwendet werden, z.B. solche, mit denen die Viskosität erniedrigt und/oder die Oberflächenspannung erhöht werden können.

Die Anwendungsform der wäßrigen Farbstoffpräparationen ist insbesondere beim Färben oder Bedrucken von Papier bevorzugt. Die Herstellung einer stabilen, flüssigen, wäßrigen, konzentrierten Färbepräparation kann auf allgemein bekannte Weise erfolgen, durch Lösen des Farbstoffes in Wasser, gegebenenfalls unter Zugabe eines oder mehrerer Hilfsmittel, z.B. einer hydrotropen Verbindung oder eines Stabilisators. Von besonderem Vorteil ist die Herstellungsmöglichkeit solcher stabiler, wäßrig-konzentrierten Präparationen im Zuge der Farbstoffsynthese selbst ohne Zwischenisolierung des Farbstoffes.

Die wäßrigen Farbstoffpräparationen enthalten im allgemeinen etwa 0,5 bis 20 Gew.-% eines oder mehrerer Farbstoffe der Formel (I) und 80 bis 99,5 Gew.-% Wasser und/oder organisches Lösungsmittel sowie gegebenenfalls weitere übliche Bestandteile.

Bevorzugte organische Lösungsmittel sind dabei Alkohole und deren Ether oder Ester, Carbonsäureamide, Harnstoffe, Sulfoxide und Sulfone, insbesondere solche mit Molekulargewichten < 200. Besonders geeignete Lösungsmittel sind beispielsweise: Methanol, Ethanol, Propanol; Ethylen-, Propylen-, Diethylen-, Thiodiethylen- und Dipropylen-glykol; Butandiol; β-Hydroxypropionitril, Pentamethylenglykol, Ethylenglykolmonoethyl- und propylether, Ethylendiglykolmonoethylether, Triethyl englykolmonobutyl ether, Butylpolyglykol, Formamid, Triethylenglykol, 1,5-Pentandiol, 1,3,6-Hexantriol, Essigsäure-2-hydroxyethylester, Essigsäure-2(2'-hydroxy)-ethylester, Glycerin, Glykolacetat, 1,2-Dihydroxypropan, 1-Methoxy-2-propanol, 2-Methoxy-1-propanol, N,N-Dimethylformamid, Pyrrolidon, N-Methyl-caprolactam, ε-Caprolactam, Butyrolacton, Harnstoff, Tetramethylharnstoff, 1,3-Dimethyl-2-imidazolidinon, N,N'-Dimethylolpropylenharnstoff, Dimethylsulfoxid, Dimethylsulfon, Sulfolan, Isopropanol, Polyethylenglykol.

Als weitere für wäßrige Farbstoffpräparationen, insbesondere für Drucktinten übliche Zusätze kommen solche ionischen oder nichtionischen Stoffe in Frage, mit denen die Viskosität und/oder Oberflächenspannung in die für die Anwendung erforderlichen Bereiche eingestellt werden kann, wie beispielsweise anionische, kationische oder neutrale Tenside wie Dispergiermittel und Viskositätsregulatoren. Die Funktion von Viskositätsregulatoren kann beispielsweise von den organischen Lösungsmitteln übernommen werden.

Bevorzugt sind wäßrige Farbstoff-Präparationen, insbesondere Farbstoff-Lösungen mit folgender Zusammensetzung:
- 0,5 bis 20 Gew.-%, insbesondere 1 bis 15 Gew.-% eines oder mehrerer Farbstoffe der genannten Art,
- 50 bis 99,5 Gew.-%, insbesondere 85 bis 99 Gew.-% Wasser,
- 0 bis 50 Gew.-%, insbesondere 0 bis 20 Gew.-% eines oder mehrere organische Lösungsmittel,
- 0 bis 30 Gew.-%, insbesondere 0 bis 5 Gew.-% Viskosität und/oder Oberflächenspannung beeinflussende Zusätze,
wobei sich die Summe der genannten Inhaltsstoffe auf 100 Gew.-% ergänzt.

Die wäßrigen Farbstoffpräparationen können durch Auflösen der Farbstoffsalze in Wasser oder aus den Kondensationslösungen, die gegebenenfalls einem Isomerenaustausch und/oder einer Entsalzung z.B. durch Druckpermeation unterworfen werden und/oder durch Zusatz eines oder mehrerer der obengenannten organischen Lösungsmitteln gegebenenfalls bei erhöhten Temperaturen (30 bis 100°C, insbesondere 30 bis 50°C) und unter Zusatz von anorganischen und organischen Basen hergestellt werden; gegebenenfalls können zusätzlich noch übliche ionische oder nichtionische Zusatzstoffe verwendet werden, z.B. solche, mit denen die Viskosität erniedrigt und/oder die Oberflächenspannung erhöht werden können.

Anstelle der Salze von (I) können auch die entsprechenden freien Säuren in Kombination mit mindestens äquimolaren Mengen der entsprechenden organischen oder organischen Basen eingesetzt werden.

Als anorganische Basen können z.B. Lithiumhydroxid, Natriumhydroxid, Kaliumhydroxid, Lithiumcarbonat, Natriumcarbonat, Kaliumcarbonat eingesetzt werden.

Als organische Basen können z.B. Ethanolamin, Diethanolamin, Triethanolamin, N-Methylethanolamin, N,N-Dimethylethanolamin, N-Methyldiethanolamin, 1-Amino-2-propanol, 2-Amino-1-propanol, Di-isopropanolamin, N-2-Hydroxyethyldiisopropanolamin, Tris, N,N,N-[2-(2'-hydroxyethoxy)-ethyl]-amin oder Natriummethylat, Lithiumethylat, Kalium-tert.-butylat dienen.

Die erfindungsgemäßen wäßrigen Farbstoffpräparationen eignen sich beispielsweise auch als Drucktinten, die insbesondere auch als Aufzeichnungsflüssigkeiten nach der Ink-Jet-Methode eingesetzt werden können.

Weiterer Gegenstand der Erfindung ist daher die Verwendung der erfindungsgemäßen wäßrigen Farbstoffpräparationen als Aufzeichnungsflüssigkeit für Ink-Jet-Aufzeichnungssysteme zur Erzeugung brillanter roter bis magenta Drucke.

Unter der Ink-Jet-Methode des erfindungsgemäßen Verfahrens wird ein Tintenstrahlaufzeichnungsverfahren verstanden, bei dem die Tintentropfen auf das Substrat gespritzt werden. Die feinen Tintentröpfchen können durch unterschiedliche Verfahren erzeugt werden. Bevorzugt werden sie nach den allgemein bekannten Thermal-Jet (beispielsweise Bubble Jet), Piezzo Jet oder Ventil-Ink-Jet-Verfahren erzeugt. Bevorzugtes Aufzeichnungsmaterial für den Ink-Jet-Drucker ist Papier.

Bei der Verwendung der erfindungsgemäßen wäßrigen Farbstoffpräparationen als Aufzeichnungsflüssigkeit für Ink-Jet-Aufzeichnungssysteme ergeben sich folgende Vorteile: Die physikalischen Eigenschaften, wie Viskosität, Oberflächenspannung und dergleichen, liegen in den geeigneten Bereichen; die Aufzeichnungsflüssigkeit verursacht keine Verstopfungen in feinen Abgabeöffnungen von Tintenstrahl-Aufzeichnungsvorrichtungen; sie liefert Bilder von hoher Dichte; bei der Lagerung kommt es in der Aufzeichnungsflüssigkeit nicht zu einer Veränderung von physikalischen Eigenschaften und zur Ablagerung von festen Bestandteilen; die Aufzeichnungsflüssigkeit eignet sich zur Aufzeichnung auf verschiedenen Aufzeichnungsmedien ohne Beschränkungen hinsichtlich der Art der Aufzeichnungsmedien; schließlich fixiert die Aufzeichnungsflüssigkeit rasch und ergibt Bilder mit ausgezeichneter Wasserfestigkeit, Lichtechtheit, Abriebbeständigkeit und Auflösung.

Die folgenden Herstellungsbeispiele sollen die vorliegende Erfindung erläutern ohne sie jedoch darauf zu beschränken. In den Beispielen bedeuten Teile stets Gewichtsteile, falls nichts anderes angegeben ist.

### Beispiele

Für die Herstellung der erfindungsgemäßen Farbstoffe (I) wurden als Ausgangsverbindungen folgende Monoazofarbstoffe eingesetzt. Deren Herstellung ist aus DOS 2 232 541 beschrieben bzw. erfolgte entsprechend.

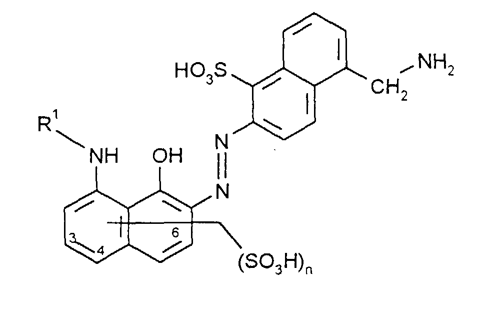

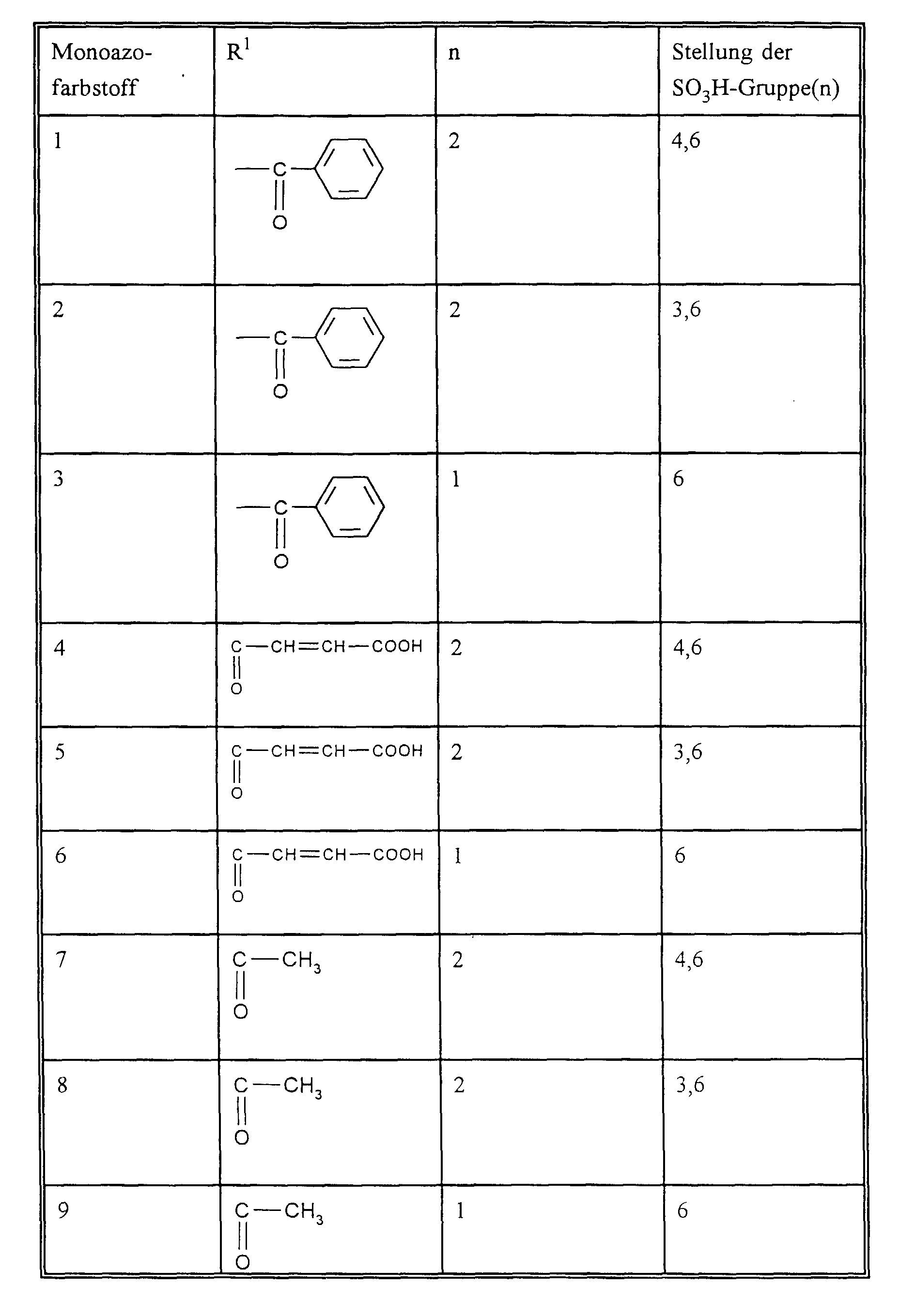

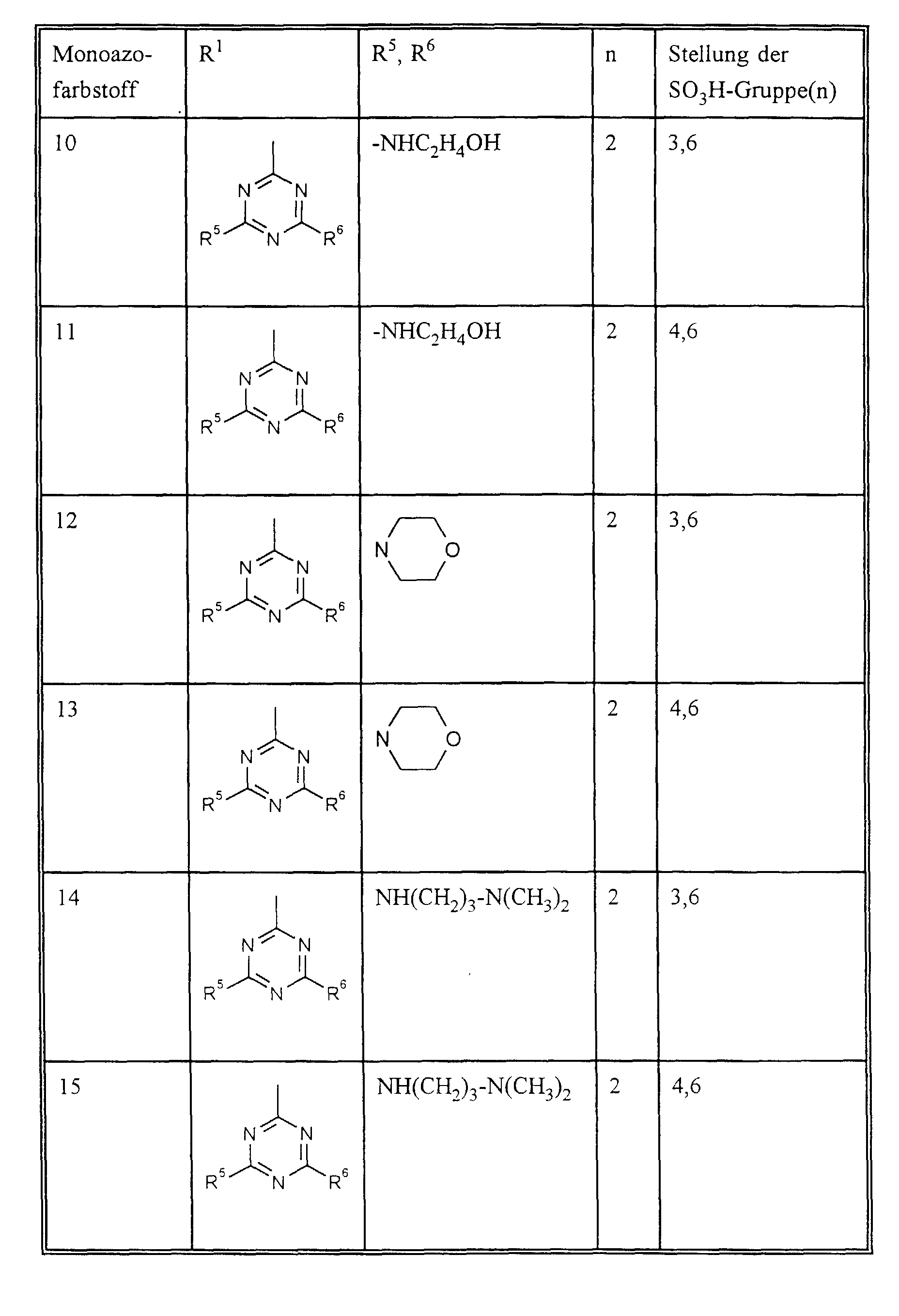

### Beispiel 1

150 Teile des Monoazofarbstoffs 1, als Na₃-Salz wurden in 2,5 l Wasser unter Zugabe von LiOH bei pH 9,5 gelöst. Unter Halten des pH-Wertes bei pH 8 wurde bei einer Temperatur von maximal 45°C solange Phosgen eingeleitet, bis die Acylierung beendet war. Das Reaktionsprodukt fiel zum Teil aus. Durch Zugabe von 600 Teilen Kochsalz wurde die Ausfällung vervollständigt. Es wurde abgesaugt und bei 70°C getrocknet. Man erhielt 225 g eines salzhaltigen Farbstoffs der Formel 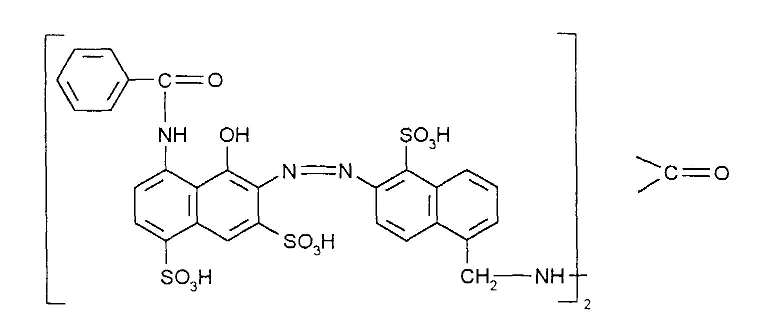 als Na₆-Salz.
λₘₐₓ (pH 9, Wasser): 511, 540 nm

Der Farbstoff färbt Papier in der Masse nach den üblichen Methoden in brillanten blaustichig roten Tönen.

### Beispiel 2

Verwendete man als Ausgangsprodukt Farbstoff 2 gelöst in 2 l Wasser und arbeitete analog Beispiel 1, erhielt man 210 g eines salzhaltigen Farbstoffs, der in Form seiner freien Säure der Formel entspricht: 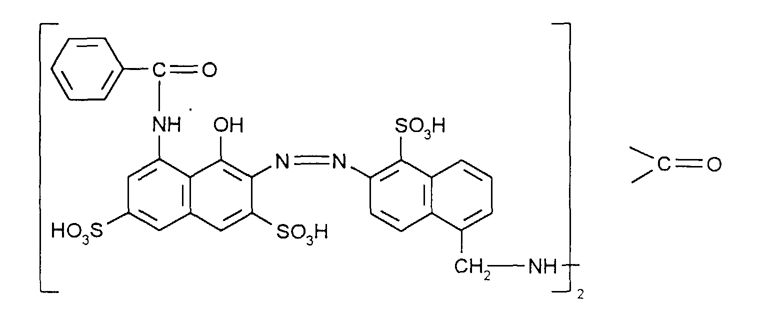 λₘₐₓ (pH 9, Wasser): 519, 546 nm
Er färbt Papier in brillanten blaustichig roten Tönen.

### Beispiel 3

150 Teile (0,2 mol) des Monoazofarbstoffs 2 wurden in 2,2 l Wasser mit NaOH bei pH 10,5 und 60°C gelöst. Innerhalb von 1 Stunde streute man 22 g Terephthalsäuredichlorid ein, ließ den pH-Wert auf 9 fallen und hielt ihn bei diesem Wert mit 5 Gew.-% NaOH. Man rührte weiter 1,5 Stunden bei 60°C bei einem pH-Wert von 9. Dann wurde mit 250 g Kochsalz ausgefällt, isoliert und bei 60°C im Vakuum getrocknet. Man erhielt 205 g eines salzhaltigen Farbstoffs, der in Form seiner freien Säure der Formel entspricht: 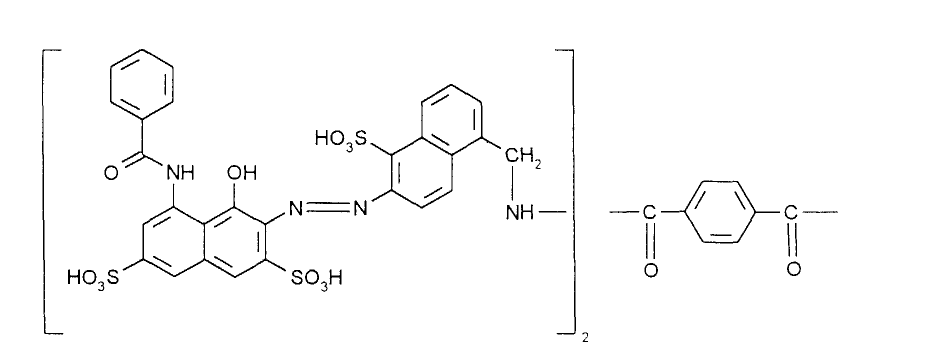 λₘₐₓ (pH 9, Wasser): 519, 544 nm

Der Farbstoff färbte Papier in brillanten magenta Tönen.

### Beispiel 4

Verwendete man als Ausgangsprodukt den Monoazofarbstoff 1 und verfuhr analog Beispiel 3, so erhielt man 200 g eines Farbstoffs als Na₆-Salz, der in Form der freien Säure der folgenden Formel entspricht: 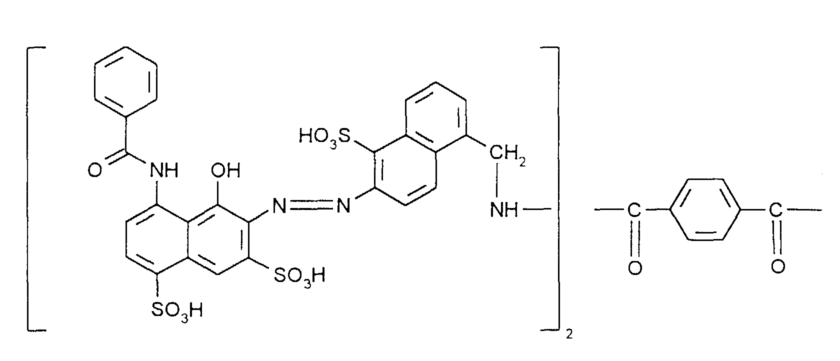 λₘₐₓ (pH 9, Wasser): 512, 540 nm (Schulter)
Er färbt Papier in brillanten roten Tönen.

### Beispiel 5

Arbeitete man analog Beispiel 3 und verwendete 130 g (0,2 mol) des Monoazofarbstoffes 3 als Na₂-Salz, so erhielt man 180 g Farbstoff der Formel von Beispiel 3 ohne eine SO₃H-Gruppe in Position 3.

Er färbte Papier in roten Tönen.
λₘₐₓ (pH 9, Wasser): 516 nm

### Beispiel 6

A. 150 Teile (0,2 mol) Monoazofarbstoffs 2, als Na₃-Salz, wurden in 1,5 l Wasser bei 20°C und pH 8 verrührt. Man streute innerhalb 0,5 Stunden 88 g (0,11 mol) Trichlortriazin in die Suspension und hielt den pH-Wert mit Soda-Lösung bei 8. Danach erwärmte man auf 50°C und rührte 1 Stunde bei dieser Temperatur, wobei der pH 8-Wert mit Soda-Lösung gehalten wurde. Man erhielt eine rote Lösung des Farbstoffs, der in Form seiner freien Säure der Formel 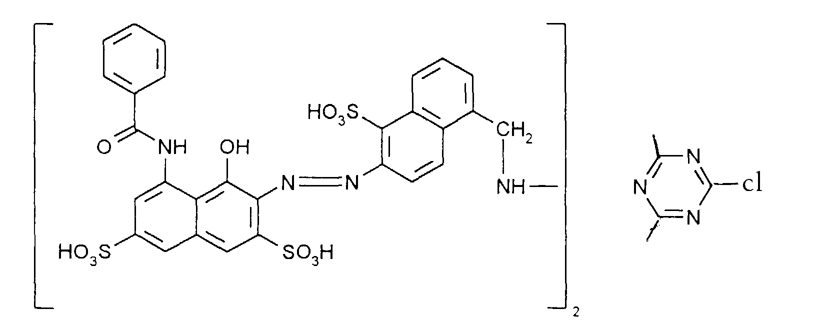 entspricht.
B. In die obige Lösung gab man 70 ml Diethanolamin und erwärmte ca. 1 Stunde auf 95°C. Man ließ die Lösung auf 85 bis 90°C abkühlen und streute dann 350 g Kochsalz ein. Bei 50°C wurde der ausgefallene Farbstoff der Formel 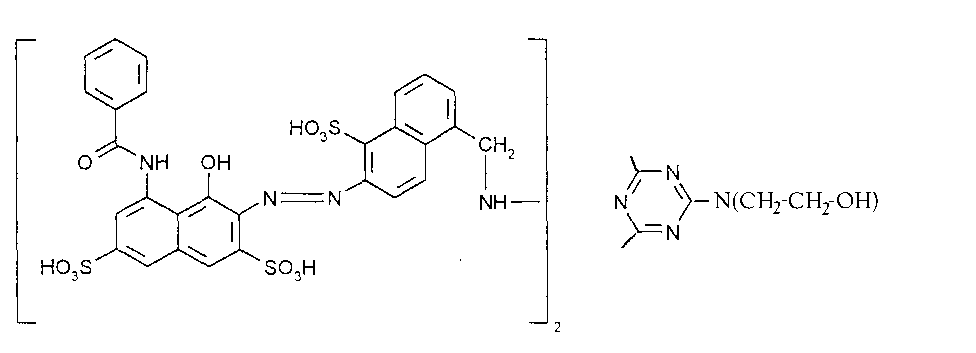 als Na-Salz isoliert.
   λₘₐₓ (pH 9, Wasser): 519, 545 nm

Er färbte Papier in brillanten, lichtechten magenta Tönen.

### Beispiel 7 bis 45

Analog der in Beispiel 6 gezeigten Methode wurden weitere wertvolle substantive Diazofarbstoffe der Formel (I), worin X einen Rest der Formel 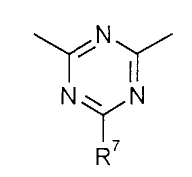 bedeutet, unter Verwendung entsprechender Monoazofarbstoffe hergestellt. Alle Farbstoffe färben Papier und Baumwolle in brillanten roten bis magenta Tönen.

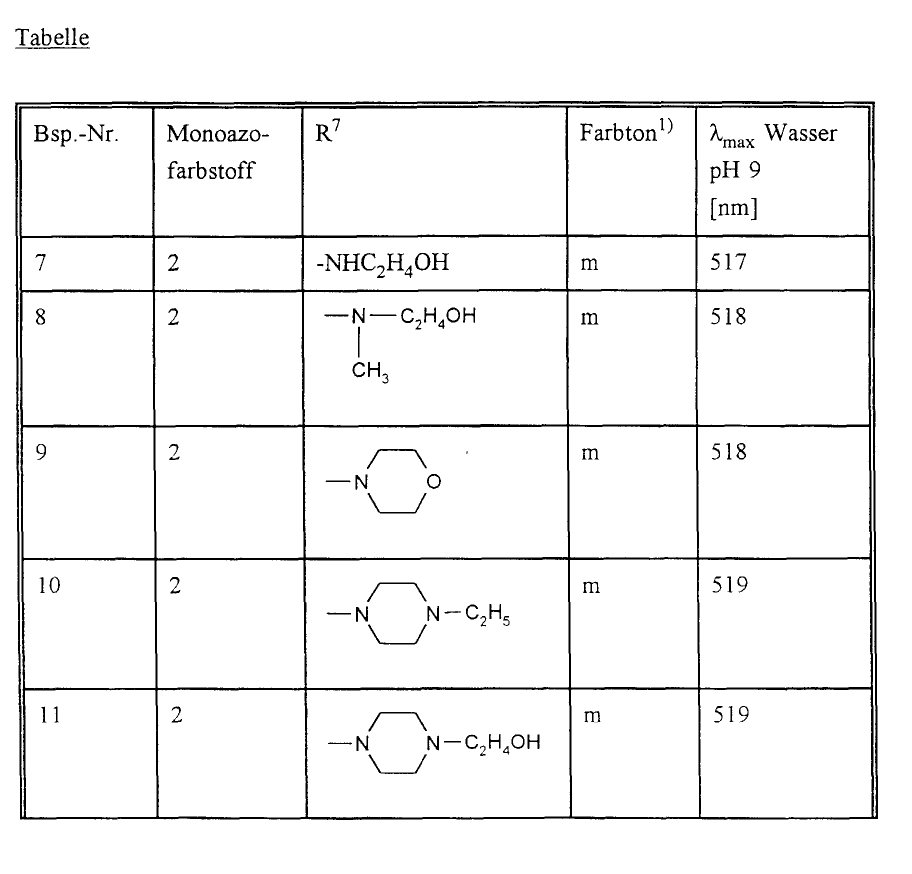

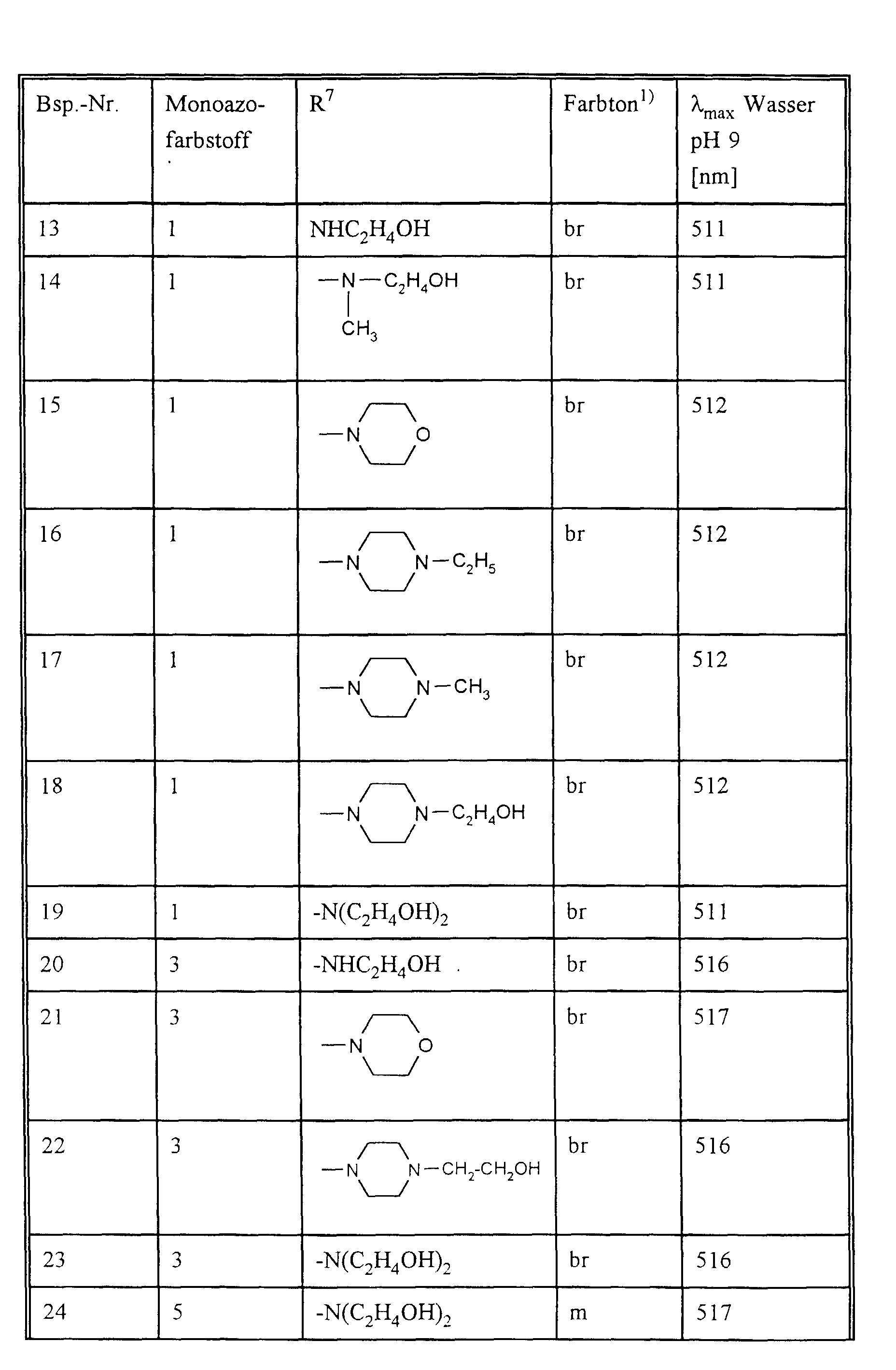

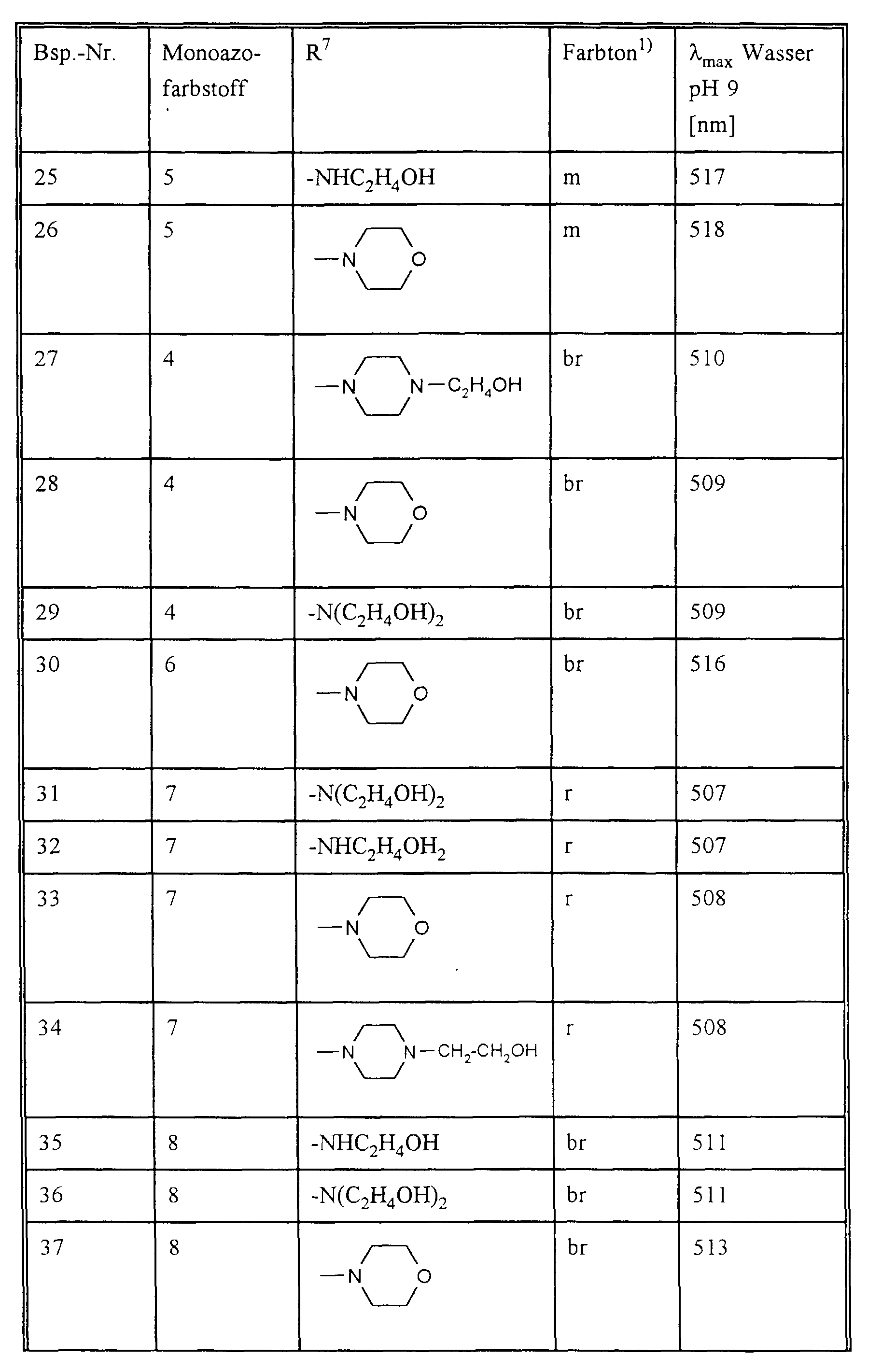

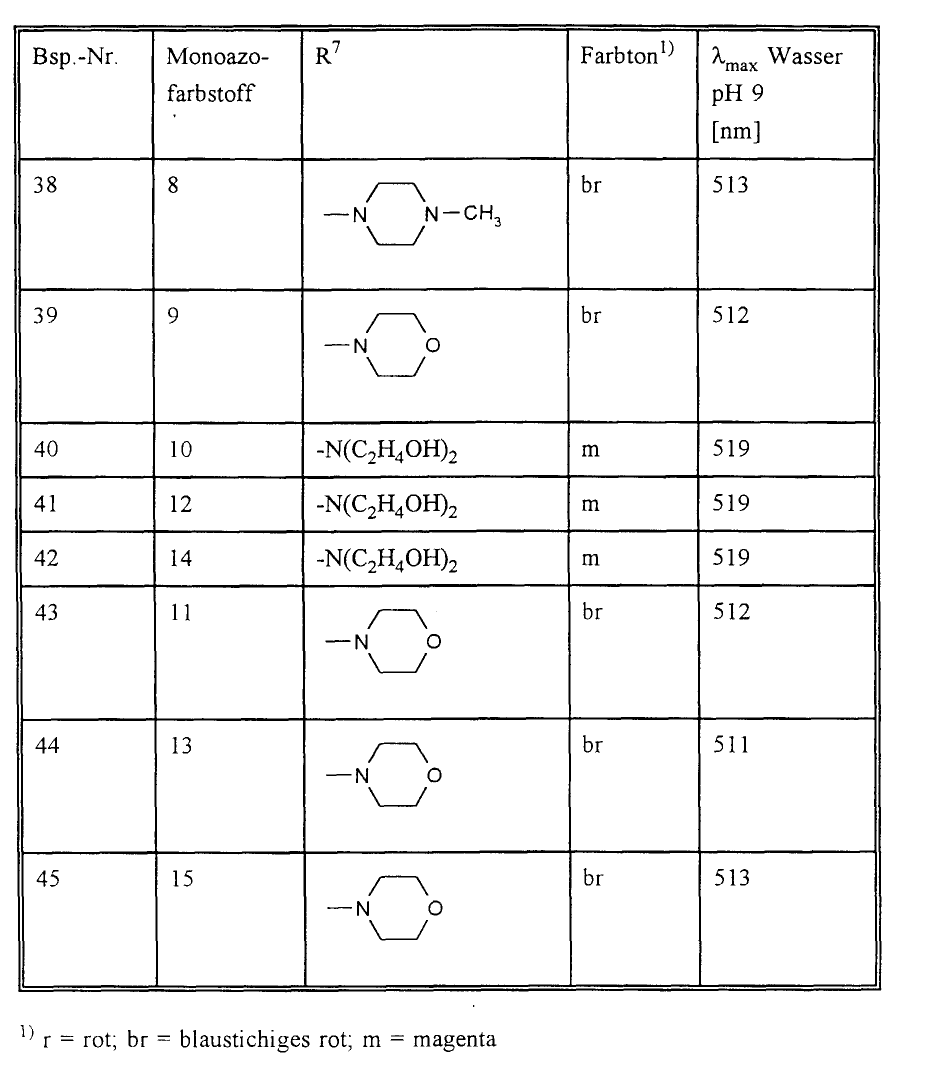

### Beispiel 46

150 Teile (0,2 mol) Monoazofarbstoff 2 wurden in 2,3 l Wasser mit LiOH bei pH 9 und 60°C gelöst. Innerhalb 30 Min. gab man 27,7 Teile (0,11 mol) 1,5-Diisocyanato-naphthalin in 10 Position zu und hielt die Temperatur bei 50 bis 60°C und den pH-Wert mit LiOH bei 8 bis 8,5. Man rührte 2 Stunden bei diesen Bedingungen nach und weitere 30 Min. bei 80°C. Nach dem Klären wurde mit 8 % des Volumens an Kochsalz, ca. 200 g ausgefällt und bei 60°C im Vakuum getrocknet.

Man erhielt 220 g des Farbstoffes als Na₆-Salz, der in Form der freien Säure der Formel entspricht: 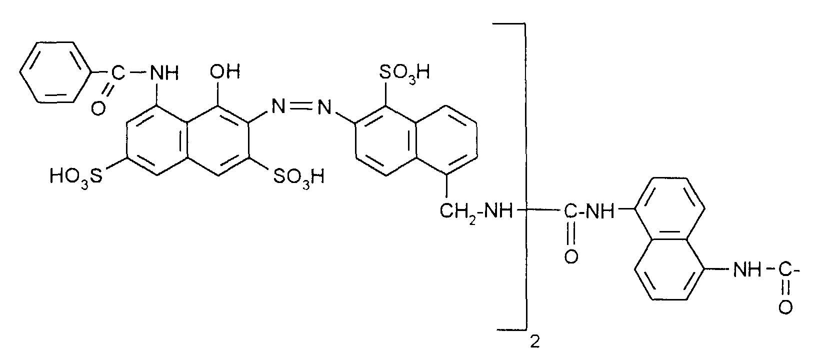 λₘₐₓ (pH 9, Wasser): 520,547 nm
Er färbt Papier in brillanten Magentatönen.

Analog der in Beispiel 46 gezeigten Methode wurden weitere Disazofarbstoffe der Formel (I) hergestellt, worin X ein Rest der Formel (VI) 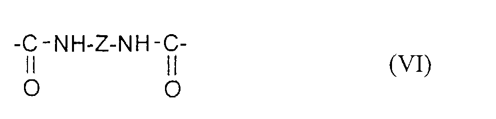 bedeutet und folgende Diisocyanate der Formel (VII)

O=C=N-Z-N=C=O (VII)

eingesetzt wurden. Dabei steht Z für:

A: -(CH₂)₆-

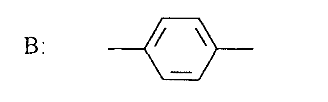

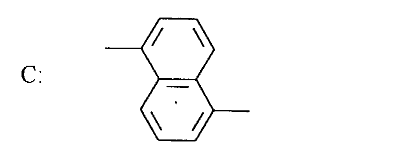

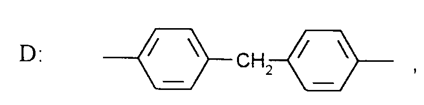

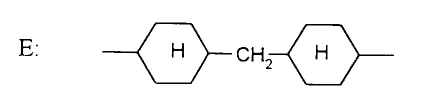

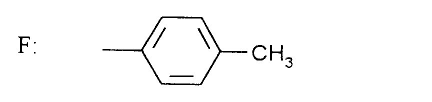

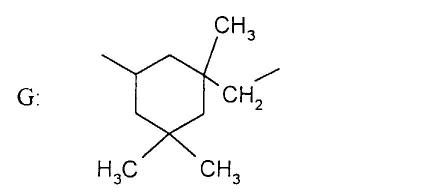

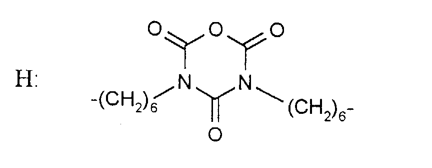

| Beispiel Nr. | Monoazofarbstoff | Z | Farbton¹⁾ | λₘₐₓ in Wasser pH 9 (nm) |
|---|---|---|---|---|
| 47 | 1 | C | br | 512 |
| 48 | 1 | A | br | 511 |
| 49 | 1 | B | br | 514 |
| 50 | 1 | D | br | 510 |
| 51 | 1 | E | br | 511 |
| 52 | 1 | F | br | 515 |
| 53 | 1 | G | br | 513 |
| 54 | 1 | H | br | 510 |
| 55 | 2 | A | m | 517 |
| 56 | 2 | B | m | 519 |
| 57 | 2 | D | m | 516 |
| 58 | 2 | E | m | 517 |
| 59 | 2 | F | m | 524 |
| 60 | 2 | G | m | 521 |
| 61 | 2 | H | m | 515 |
| 62 | 3 | C . | br | 517 |
| 63 | 3 | D | br | 519 |
| 64 | 3 | A | br | 517 |
| 65 | 7 | A | r | 506 |
| 66 | 7 | B | r | 507 |
| 67 | 7 | C | r | 508 |
| 68 | 7 | D | r | 505 |
| 69 | 7 | E | r | 506 |
| 70 | 7 | F | r | 508 |
| 71 | 7 | G | r | 508 |
| 72 | 7 | H | r | 506 |
| 73 | 8 | A | br | 512 |
| 74 | 8 | B | br | 515 |
| 75 | 8 | C | br | 515 |
| 76 | 8 | D | br | 511 |
| 77 | 8 | E | br | 512 |
| 78 | 8 | F | br | 516 |
| 79 | 4 | A | br | 507 |
| 80 | 4 | B | br | 508 |
| 81 | 4 | C | br | 509 |
| 82 | 4 | D | br | 506 |
| 83 | 4 | G | br | 509 |
| 84 | 5 | A | m | 516 |
| 85 | 5 | B . | m | 518 |
| 86 | 5 | C | m | 519 |
| 87 | 5 | D | m | 515 |
| 88 | 5 | E | m | 516 |
| 89 | 5 | H | m | 514 |

| | | | | |
|---|---|---|---|---|
| ¹⁾ r = rot; br = blaustichiges rot; m = magenta. | | | | |

### Beispiel 90

200 g des salzhaltigen Farbstoffs von Beispiel 3 wurden in 3 1 Wasser bei 40°C und ein pH-Wert von 8 gelöst. In einer üblichen Druckpermeationsanlage (mit z.B. Membran G 20 der Fa. Sesal) wurde die Lösung auf 1,5 1 aufkonzentriert und solange ultrafiltriert bis der Cl^{⊖}-Gehalt < 0,05 % betrug. Anschließend wurde auf ca. 1 1 aufkonzentriert, so daß der Farbstoffgehalt 10,5 %, bezogen auf das Na₆-Salz, betrug.

Diese Lösung ist über längere Zeit stabil und wurde direkt zum Färben von Papier oder Baumwolle und zur Herstellung von Drucktinten für den Ink-Jet-Druck eingesetzt.

Entsprechend wurden auch aus den übrigen in den Beispielen beschriebenen Farbstoffe stabile, konzentrierte Lösungen erhalten.

### Anwendungsvorschrift A

0,5 Teile des Farbstoffpulvers aus Beispiel 3 werden in 100 Teilen heißem Wasser gelöst und auf Raumtemperatur abgekühlt. Die Lösung gibt man zu 100 Teilen chemisch gebleichter Sulfitcellulose, die mit 2.000 Teilen Wasser in einem Holländer gemahlen wurde. Nach 15 Minuten Durchmischung wird auf übliche Art mit Harzleim und Aluminiumsulfat geleimt. Papier, das aus diesem Material hergestellt wird, zeigt einen blaustichig roten Farbton und besitzt gute Abwasser- und Naßechtheiten sowie gute Lichtechtheit.

### Anwendungvorschrift B

Man mischt 50 Teile gebleichten Nadelholz-Sulfitzellstoff und 50 Teile gebleichten Buchenzellstoff (Mahlgrad 30° SR (°SR = Grad Schopper Riegler) und 0,5 Teile des Farbstoffs aus Beispiel 3 in Wasser (pH 4, Wasserhärte 10°dH). Nach 16 Minuten erfolgt die Blattbildung. Das Papier ist in intensiv blaustichig roter Nuance gefärbt. Eine Färbung bei pH 7 zeigt demgegenüber keine Stärke- oder Nuancenabweichung. Der Ausziehgrad erreicht 100 % und das Abwasser ist farblos.

### Anwendungsvorschrift C

100 g Farbstofflösung aus Beispiel 46 wurden mit 25 g Pyrrolidon-2 und 225 g Wasser verrührt und über ein 0,8 µm Filter geklärt. Mit dieser Tinte wurden die Tintenkartuschen der handelsüblichen Ink-Jet-Drucker befüllt, z.B. HP Desk Jet 560, Canon BJC 600 und BJC 4000, und mit den entsprechenden Druckern brillante, lichtechte und ausblutechte magenta Drucke auf Papier erzeugt.

Anstelle von Pyrrolidon wurden auch die sonst üblichen organischen Lösungsmittel wie Di-, Tri-ethylenglykol, Pentandiol, 1,2-Propylenglykol, Harnstoff u.a. verwendet.

Verwendete man den Farbstoff der Formel von Beispiel 4, so erhielt man ebenfalls brillante, lichtechte und wasserechte magenta Drucke, die ein um 7 nm geringeres Absorptionsmaximum haben.

## Patentansprüche

1. Verbindungen der Formel (I) 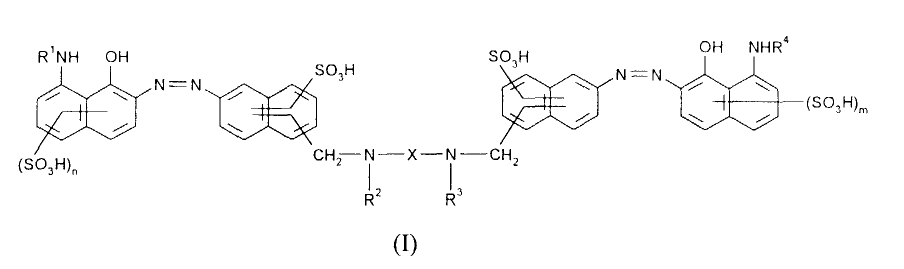 worin
R¹ und R⁴ unabhängig voneinander für einen Acylrest stehen,
R² und R³ unabhängig voneinander für Wasserstoff oder unsubstituiertes oder substituiertes C₁-C₄-Alkyl stehen,
X ein nicht faserreaktives Brückenglied ist und für CO, einen Rest einer aliphatischen-, aromatischen-, carbocyclischen-, heterocyclischen- oder aromatischheterocyclischen Di carbonyl verbindung oder für einen Rest der Formel 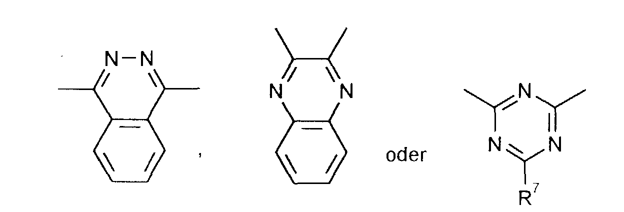
steht, worin
R⁷ für OH, C₁-C₄-Alkoxy, C₆-C₁₀-Aryloxy, C₆-C₁₀-Aryl, C₁-C₄-Alkyl, C₁-C₄-Alkylmercapto oder Phenylmercapto, NH₂ oder
für einen Rest der Formel NR¹¹R¹² steht,
worin
R¹¹ Wasserstoff, C₁-C₄-Alkyl oder C₂-C₄-Hydroxyalkyl und
R¹² C₂-C₄-Hydroxyalkyl oder C₂-C₄-Hydroxyalkoxy-C₂-C₄-alkyl bedeuten oder -NR¹¹R¹² einen 5- oder 6-gliedrigen Ring bildet, der 1 bis 3 Heteroatome einschließt und der unsubstituiert oder substituiert ist durch 1 bis 3 Substituenten aus der Reihe C₁-C₄-Alkyl und durch Hydroxy oder Amino monosubstituiertes C₂-C₄-Alkyl, und deren Salze, und
n und m unabhängig voneinander für 1 oder 2 stehen.

2. Verbindungen gemäß Anspruch 1, worin
R¹ und R⁴ unabhängig voneinander Alkylcarbonyl, Alkylsulfonyl, Arylcarbonyl, Arylsulfonyl oder einen Rest der Formel 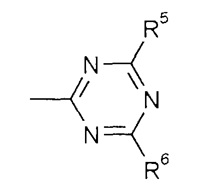 bedeutet, worin
R⁵ und R⁶ unabhängig voneinander für OH, C₁-C₄-Alkoxy, C₆-C₁₀-Aryloxy, C₆-C₁₀-Aryl, C₁-C₄-Alkyl, C₁-C₄-Alkylmercapto oder Phenylmercapto, NH₂ oder mono- oder disubstituiertes Amin stehen.

3. Verbindungen gemäß Anspruch 1, worin
X für CO, einen Rest einer aliphatischen-, aromatischen-, carbocyclischen-, heterocyclischen- oder aromatisch-heterocyclischen Dicarbonylverbindung oder für einen Rest der Formel 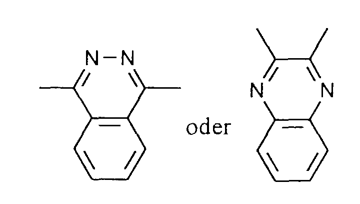 steht.

4. Verbindungen gemäß Anspruch 1, worin
X für CO oder einen Dicarbonyliden-Rest der Formel 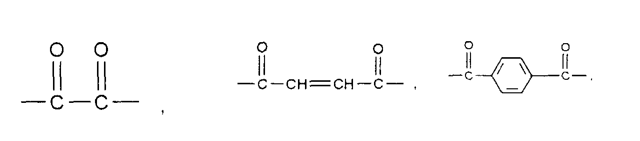 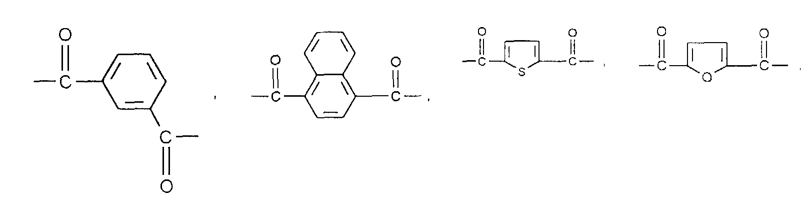 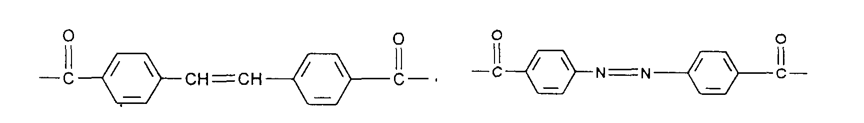 oder 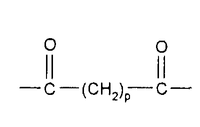 steht,
worin
o und p unabhängig für eine Zahl von 1 bis 6 stehen,
oder für einen bivalenten Rest der Formel 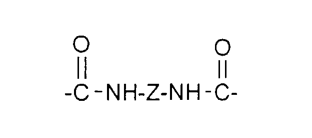 worin Z
-(CH₂)₆, 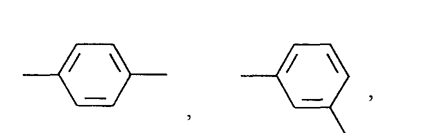 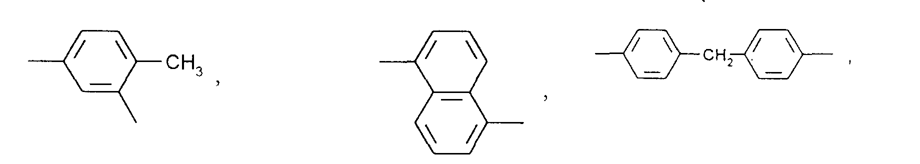 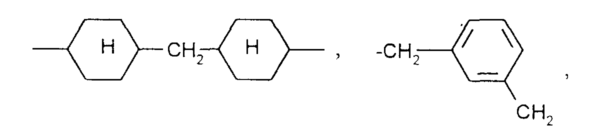 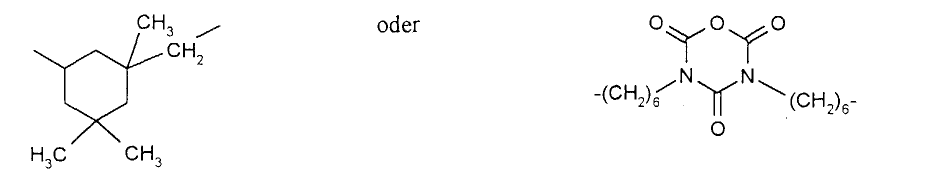
bedeutet.

5. Verbindungen gemäß Anspruch 1, die der Formel (II) entsprechen

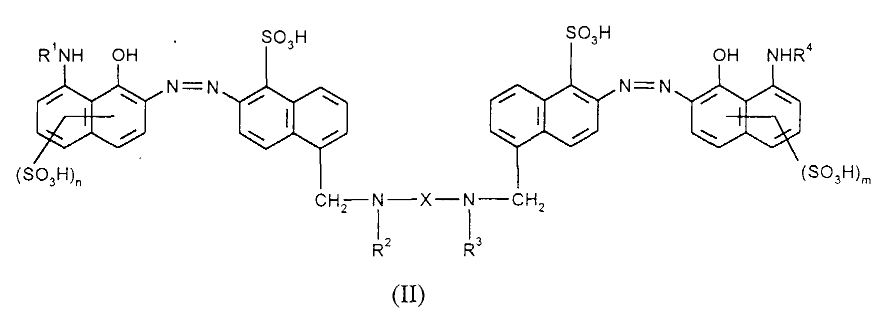

6. Verbindungen gemäß Anspruch 1, die der Formel (III) entsprechen 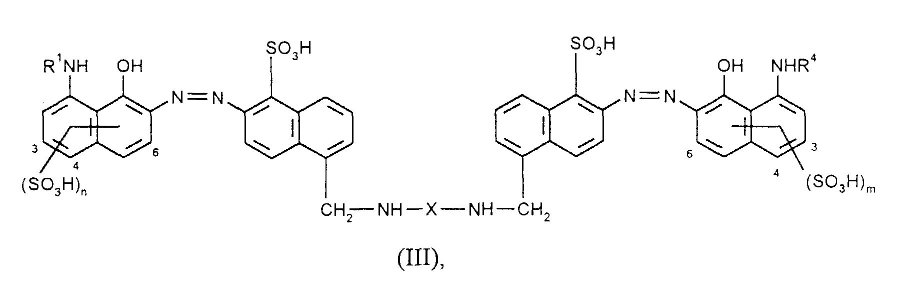 worin die SO₃H-Gruppen in den terminalen Naphthalinringen jeweils unabhängig voneinander in den Positionen 3, 4 und/oder 6 stehen,
R¹ und R⁴ unabhängig voneinander für C₁-C₄-Alkylcarbonyl, Benzoyl oder durch C₁-C₄-Alkyl, C₁-C₄-Alkoxy und/oder NO₂ substituiertes Benzoyl stehen.

7. Verbindungen gemäß Anspruch 1, die der Formel (IV) entsprechen 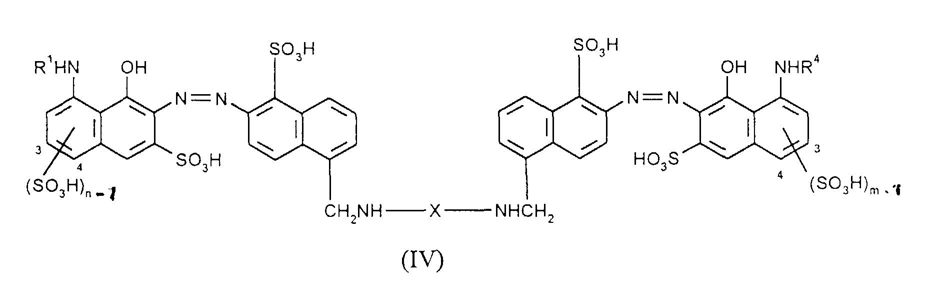 worin die SO₃H-Gruppe in den terminalen Naphthalinringen jeweils unabhängig voneinander in der Position 3 oder 4 steht.

8. Verfahren zur Herstellung zur Verbindung gemäß Anspruch 1, dadurch gekennzeichnet, daß man einen Monoazofarbstoff der Formel (V), in Form der Verbindung (Va) und/oder (Vb) 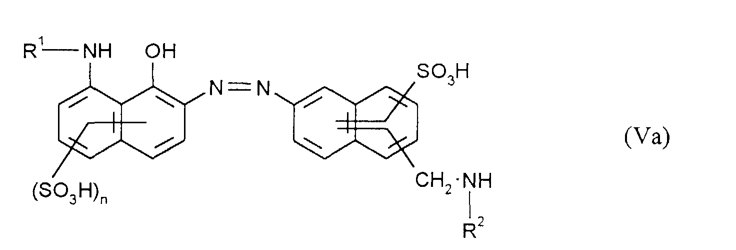 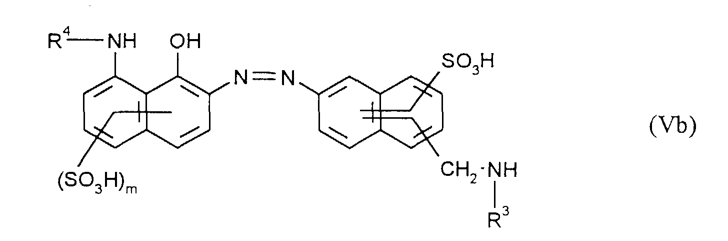 worin R¹ bis R⁴, n und m die in Anspruch 1 angegebenen Bedeutungen haben,
mit reaktiven Verbindungen umsetzt, die mindestens zwei gegenüber primären oder sekundären Aminen reaktive Gruppen enthalten, wobei das molare Verhältnis des Monoazofarbstoffes der Formel (V) zur reaktiven Verbindung ≥ 2:1 beträgt.

9. Wäßrige Farbstoff-Präparationen enthaltend 0,5 bis 20 Gew.-% eines Farbstoffs gemäß Anspruch 1, 50 bis 99,5 Gew.-% Wasser und/oder organisches Lösungsmittel sowie gegebenenfalls weiteren üblichen Bestandteilen.

10. Verwendung der Verbindungen gemäß Anspruch 1 zum Färben und Bedrucken hydroxyl- und/oder amidgruppenhaltiger Substrate, insbesondere zum Bedrucken von Papier nach der Ink-Jet-Methode.

## Claims

1. Compounds of the formula (I) 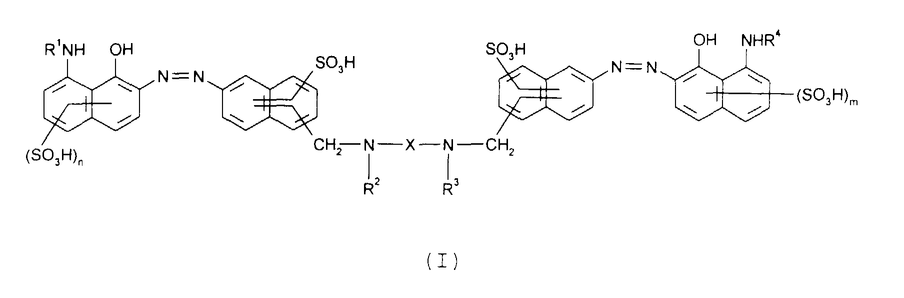 wherein
R¹ and R⁴ independently of one another represent an acyl radical,
R² and R³ independently of one another represent hydrogen or unsubstituted or substituted C₁-C₄-alkyl,
X is a bridge member which is not fibre-reactive and represents CO or a radical of an aliphatic, aromatic, carbocyclic, heterocyclic or aromatic-heterocyclic dicarbonyl compound, or represents a radical of the formula 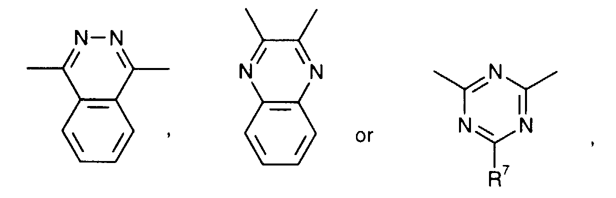
wherein
R⁷ represents OH, C₁-C₄-alkoxy, C₆-C₁₀-aryloxy, C₆-C₁₀-aryl, C₁-C₄-alkyl, C₁-C₄-alkylmercapto or phenylmercapto, NH₂ or
represents a radical of the formula NR¹¹R¹²
wherein
R¹¹ is hydrogen, C₁-C₄-alkyl or C₂-C₄-hydroxyalkyl and
R¹² denotes C₂-C₄-hydroxyalkyl or C₂-C₄-hydroxyalkoxy-C₂-C₄-alkyl or -NR¹¹R¹² forms a 5- or 6-membered ring which includes 1 to 3 heteroatoms and is unsubstituted or substituted by 1 to 3 substituents from the series consisting of C₁-C₄-alkyl and C₂-C₄-alkyl which is monosubstituted by hydroxyl or amino, and salts thereof, and
n and m independently of one another represent 1 or 2.

2. Compounds according to Claim 1, wherein
R¹ and R⁴ independently of one another denote alkylcarbonyl, alkylsulphonyl, arylcarbonyl, arylsulphonyl or a radical of the formula 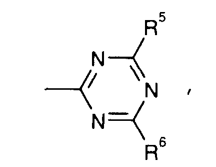
wherein
R⁵ and R⁶ independently of one another represent OH, C₁-C₄-alkoxy, C₆-C₁₀-aryloxy, C₆-C₁₀-aryl, C₁-C₄-alkyl, C₁-C₄-alkylmercapto or phenylmercapto, NH₂ or mono- or disubstituted amino.

3. Compounds according to Claim 1, wherein
X represents CO or a radical of an aliphatic, aromatic, carbocyclic, heterocyclic or aromatic-heterocyclic dicarbonyl compound, or represents a radical of the formula

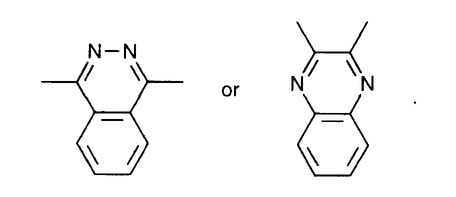

4. Compounds according to Claim 1, wherein
X represents CO or a dicarbonylidene radical of the formula 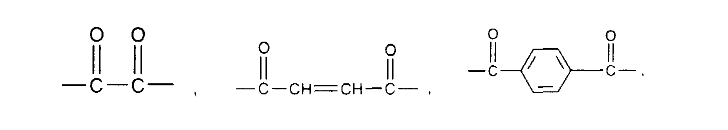 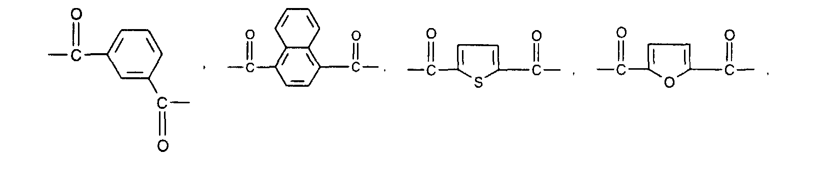 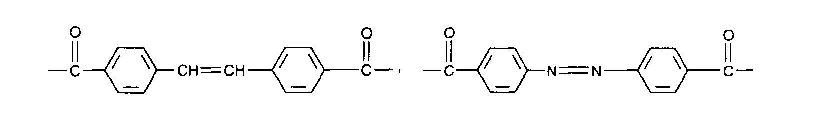 or 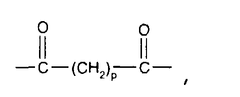
wherein
o and p independently of one another represent a number from 1 to 6,
or represents a bivalent radical of the formula 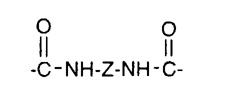 wherein Z denotes
-(CH₂)₆,

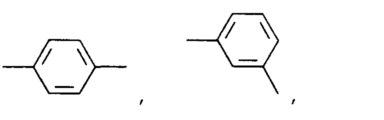

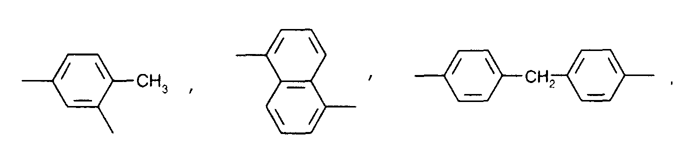

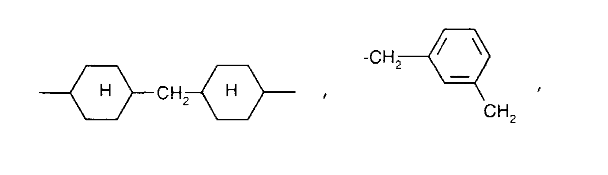

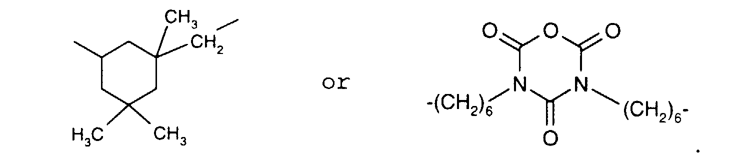

5. Compounds according to Claim 1, which correspond to the formula (II)

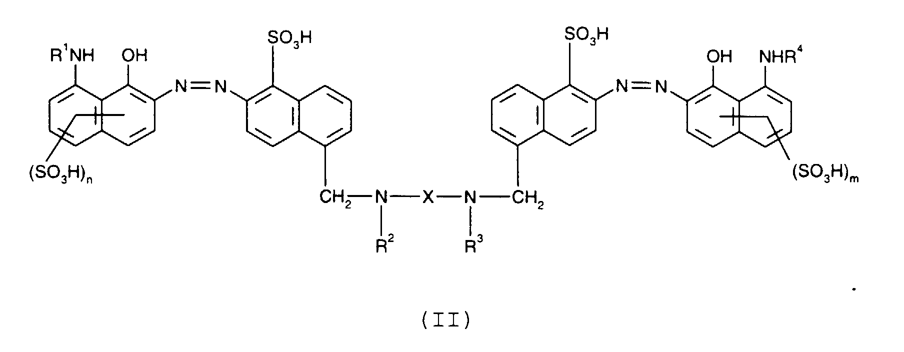

6. Compounds according to Claim 1, which correspond to the formula (III) 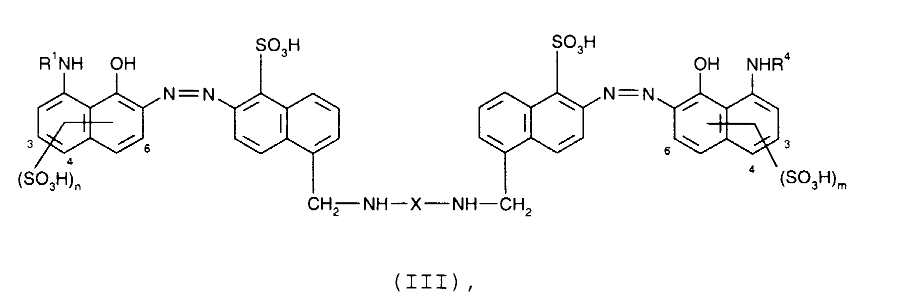 wherein the SO₃H groups in the terminal naphthalene rings in each case independently of one another are in positions 3, 4 and/or 6 and
R¹ and R⁴ independently of one another represent C₁-C₄-alkylcarbonyl, benzoyl or benzoyl which is substituted by C₁-C₄-alkyl, C₁-C₄-alkoxy and/or NO₂.

7. Compounds according to Claim 1, which correspond to the formula (IV) 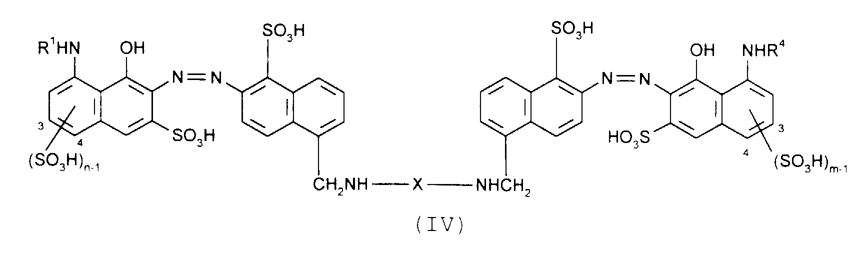 wherein the SO₃H group in the terminal naphthalene rings in each case independently of one another is in position 3 or 4.

8. Process for the preparation of a compound according to Claim 1, characterized in that a monoazo dye of the formula (V), in the form of the compound (Va) and/or (Vb) 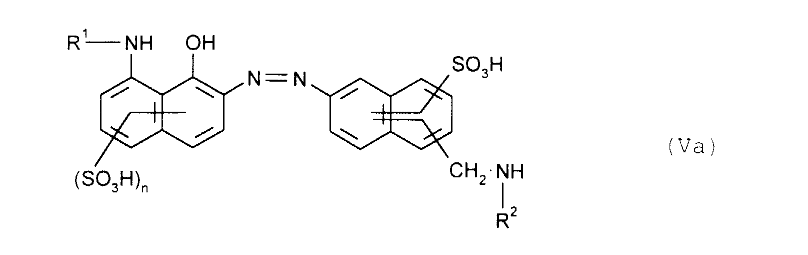 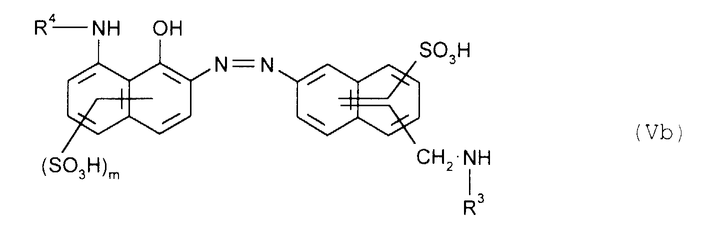 wherein R¹ to R⁴, n and m have the definitions indicated in Claim 1,
is reacted with reactive compounds which contain at least two groups that are reactive towards primary or secondary amines, the molar ratio of the monoazo dye of the formula (V) to the reactive compound being ≥ 2:1.

9. Aqueous dye preparations containing from 0.5 to 20% by weight of a dye according to Claim 1, 50 to 99.5% by weight of water and/or organic solvent and optionally further customary constituents.

10. Use of the compounds according to Claim 1 for dyeing and printing substrates containing hydroxyl and/or amide groups, especially for printing paper by the ink-jet method.

## Revendications

1. Composés de formule (I) 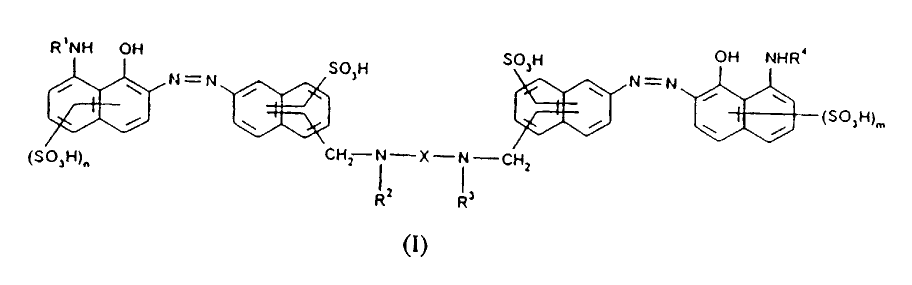 dans laquelle
R¹ et R⁴ indépendamment l'un de l'autre sont un reste acyle,
R² et R³ indépendamment l'un de l'autre sont l'hydrogène ou un groupe alkyle en C₁-C₄ non substitué ou substitué,
X est un chaînon de pontage non réactif aux fibres et signifie CO, un reste d'un composé dicarbonyle aliphatique, aromatique, carbocyclique, hétérocyclique ou aromatique-hétérocyclique ou un reste de formule 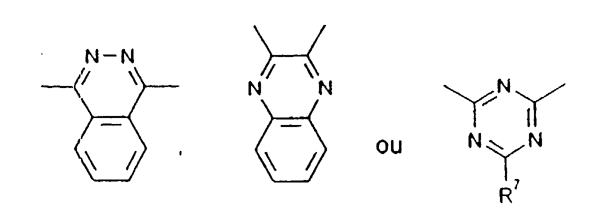
dans laquelle
R⁷ signifie OH, un groupe alcoxy en C₁-C₄, aryloxy en C₆-C₁₀, aryle en C₆-C₁₀ alkyle en C₁-C₄, alkylmercapto C₁-C₄ ou phénylmercapto, NH₂ ou un reste de formule NR¹¹R¹²,
R¹¹ signifie l'hydrogène, un groupe alkyle en C₁-C₄ ou hydroxyalkyle en C₂-C₄ et
R¹² signifie un groupe hydroxyalkyle en C₂-C₄ ou hydroxyalcoxy(en C₂-C₄)-alkyle (en C₂-C₄) ou -NR¹¹R¹² forme un cycle à 5 ou 6 chaînons qui comprend de 1 à 3 hétéroatomes et qui est non substitué ou substitué par 1 à 3 substituants de la classe d'un radical alkyle en C₁-C₄ et un radical alkyle en C₂-C₄ monosubstitué par un groupe hydroxy ou amino, et leurs sels, et
n et m sont égaux indépendamment l'un de l'autre à 1 ou 2.

2. Composés selon la revendication 1, caractérisés en ce que R¹ et R⁴ signifient indépendamment l'un de l'aute un radical alkylcarbonyle, alkylsulfonyle, arylcarbonyle, arylsulfonyle ou un reste de formule 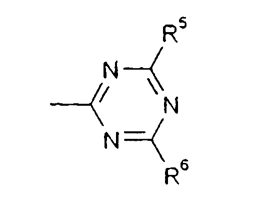 dans laquelle
R⁵ et R⁶ sont indépendamment l'un de l'autre OH, un radical alcoxy en C₁-C₄, aryloxy en C₆-C₁₀, aryle en C₆-C₁₀, alkyle en C₁-C₄, alkylmercapto en C₁-C₄ ou phénylmercapto, NH₂ ou un radical amino mono- ou di-substitué.

3. Composés selon la revendication 1, caractérisés en ce que
X représente CO, un reste d'un composé dicarbonyle aliphatique, aromatique, carbocyclique, hétérocyclique ou aromatique-hétérocyclique ou un reste de formule

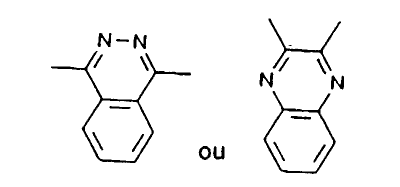

4. Composés selon la revendication 1, caractérisés en ce que
X représente CO ou un reste dicarbonyle de formule 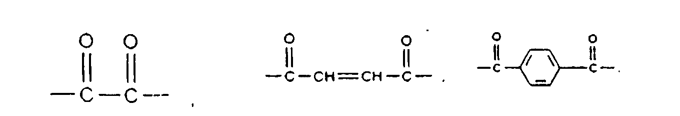 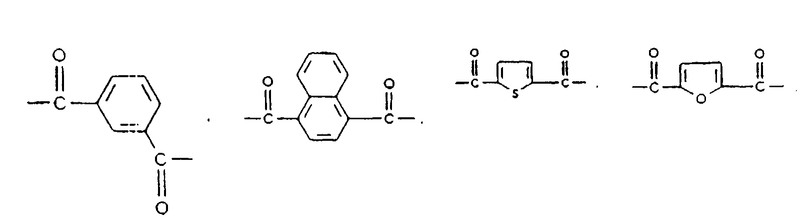 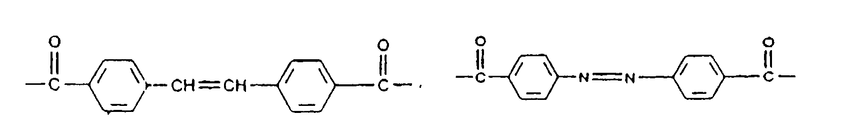 ou 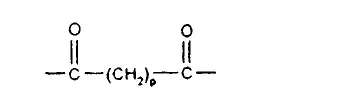 dans laquelle
o et p indépendamment l'un de l'autre sont un nombre de 1 à 6 ou un reste bivalent de formule 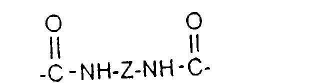 dans laquelle Z signifie
-(CH₂)₆,

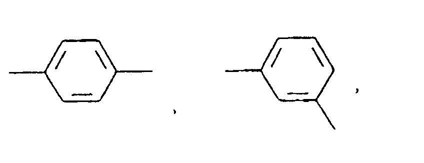

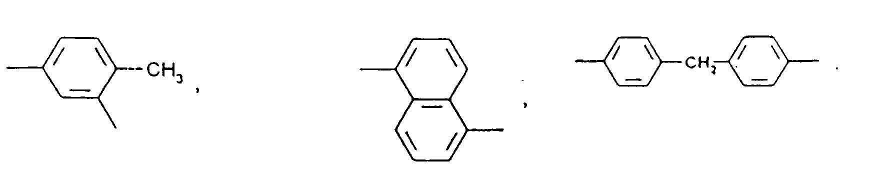

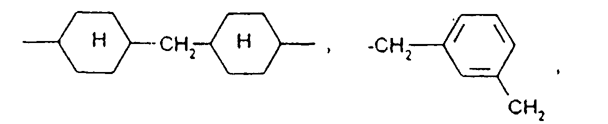

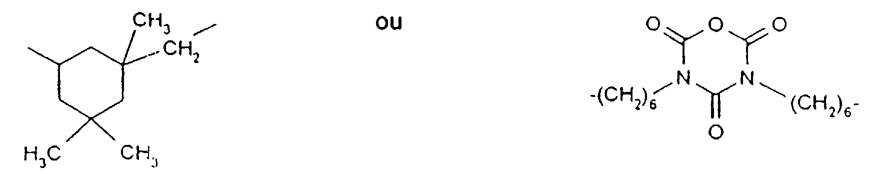

5. Composés selon la revendication 1 qui correspondent à la formule (II)

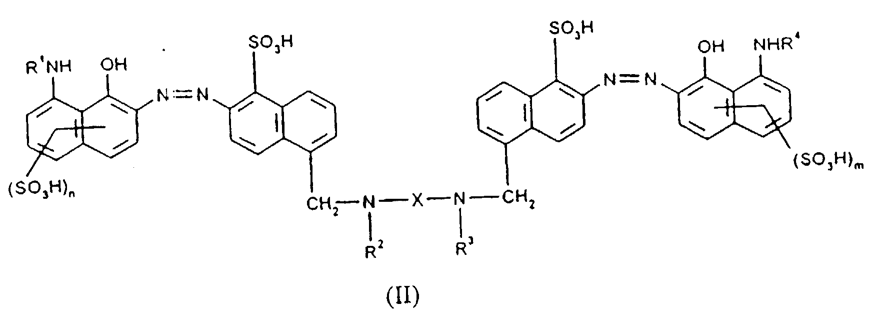

6. Composés selon la revendication 1 qui correspondent à la formule (III) 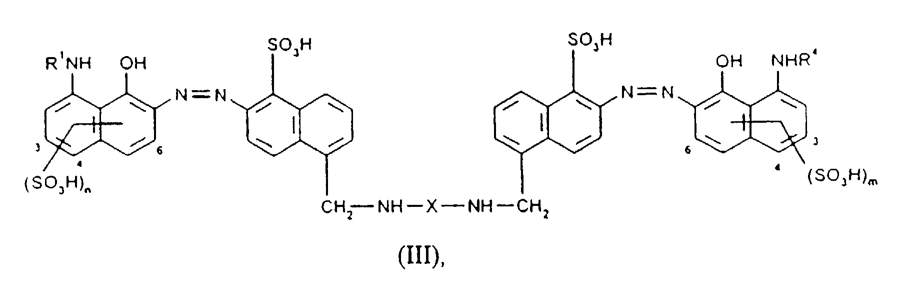 dans laquelle les groupes SO₃H dans les cycles naphtalène terminaux sont chaque fois indépendamment l'un de l'autre dans les positions 3, 4 et/ou 6.
R¹ et R⁴ représentent indépendamment l'un de l'autre un groupe alkylcarbonyle en C₁-C₄, benzoyle ou benzoyle substitué par un groupe alkyle en C₁-C₄, alcoxy en C₁-C₄, et/ou NO₂.

7. Composés selon la revendication 1 qui correspondent à la formule (IV) 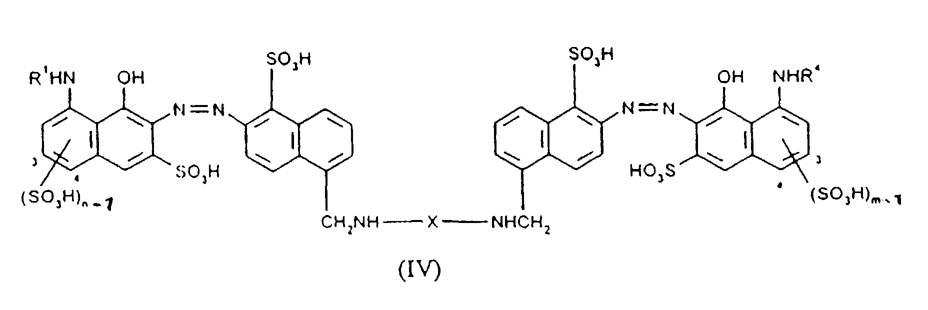 dans laquelle les groupes SO₃H dans les cycles naphtalène terminaux sont chaque fois indépendamment l'un de l'autre dans la position 3 ou 4.

8. Procédé de préparation de composés selon la revendication 1, caractérisé en ce qu'on fait réagir un colorant monoazoïque de formule (V) sous la forme du composé (Va) et/ou (Vb) 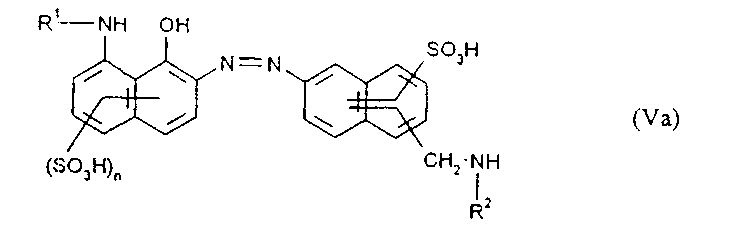 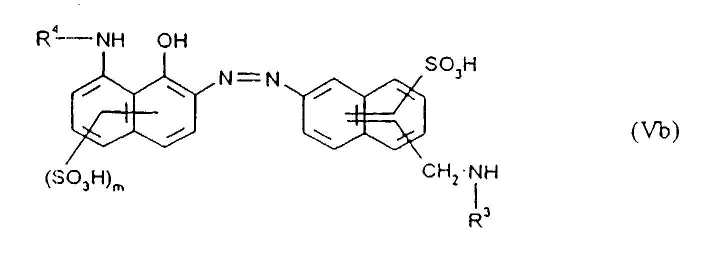 formules dans lesquelles R¹ à R⁴, n et m ont les significations données dans la revendication 1,
avec des composés réactifs qui contiennent au moins deux groupes réactifs vis-à-vis des amines primaires ou secondaires, le rapport molaire du colorant monoazoïque de formule (V) au composé réactif étant ≥ 2 : 1.

9. Préparations de colorant aqueuses contenant 0,5 à 20 % en poids d'un colorant selon la revendication 1, 50 à 99,5 % en poids d'eau et/ou d'un solvant organique ainsi qu'éventuellement d'autres composants classiques.

10. Utilisation des composés selon la revendication 1 pour la coloration et l'impression de substrats contenant des groupes hydroxyle et/ou amido, en particulier pour l'impression de papier selon le procédé par jet d'encre.
